# FASCICULE DE BREVET EUROPEEN

(11) **EP 3 171 440 B1**
(45) Date de publication et mention de la délivrance du brevet: **06.12.2017**
(21) Numéro de dépôt: 16196984.5
(22) Date de dépôt: 03.11.2016
(51) Int. Cl.: H01M 8/0206, H01M 8/0254, H01M 8/026, H01M 8/0267, H01M 8/1018, H01M 8/124

(54) **PLAQUES BIPOLAIRES POUR LIMITER LE CONTOURNEMENT DES CANAUX D'ÉCOULEMENT PAR LES RÉACTIFS**
BIPOLARE PLATTEN ZUR BEGRENZUNG DER UMGEHUNG DER STRÖMUNGSKANÄLE DURCH DIE REAGENZIEN
BIPOLAR PLATES FOR LIMITING THE BYPASS OF FLOW CHANNELS BY THE REAGENTS

(30) Priorité: 17.11.2015 FR 1561040
(43) Date de publication de la demande: 24.05.2017
(73) Titulaire: Commissariat à l'Énergie Atomique et aux Énergies Alternatives, 75015 Paris (FR)
(72) Inventeur: POIROT-CROUVEZIER, Jean-Philippe, 38450 SAINT GEORGES DE COMMIERS (FR)
(74) Mandataire: GIE Innovation Competence Group

(56) Documents cités:
- WO-A1-2009/156295
- WO-A2-2004/102712
- US-A1- 2007 298 308
- US-A1- 2009 169 964

## Description

L'invention concerne les réacteurs électrochimiques à assemblages membrane-électrodes et à plaques bipolaires, tels que les électrolyseurs ou les piles à combustibles à basse température. L'invention concerne en particulier la limitation des courts-circuits de fluide dans de tels réacteurs électrochimiques.

Les piles à combustible sont par exemple envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Un combustible tel que du dihydrogène ou du méthanol est utilisé comme carburant de la pile à combustible.

Dans le cas du dihydrogène, celui-ci est oxydé et ionisé sur une électrode de la pile et un comburant est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, fonctionnent à basse température et présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider les réactifs et les produits vers/depuis la membrane, pour guider du liquide de refroidissement, et pour séparer différents compartiments. Les plaques bipolaires sont également électriquement conductrices pour former des collecteurs des électrons générés au niveau de l'anode. Selon une conception relativement fréquente, une plaque bipolaire est formée de deux tôles métalliques assemblées par soudage et ménageant généralement entre elles des canaux d'écoulement d'un liquide de refroidissement.

Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires. Une conduction électronique est réalisée à travers les plaques bipolaires, une conduction ionique étant obtenue à travers la membrane.

Les plaques bipolaires alimentent en continu les surfaces réactives des électrodes en réactifs, au fur et à mesure de leur consommation. Les plaques bipolaires comportent des réseaux de canaux d'écoulement assurant la distribution des réactifs dans les zones réactives. Les réseaux de canaux d'écoulement sont connectés entre des collecteurs d'entrée et de sortie, traversant généralement l'empilement de part en part. Chaque collecteur est entouré par un joint pour éviter le mélange des différents fluides circulant dans la pile. Des zones d'injection sont définies pour permettre aux réactifs de franchir ces joints vers des canaux d'écoulement appropriés. Une zone d'homogénéisation raccorde le plus souvent une zone d'injection à des canaux d'écoulement. Un joint périphérique entoure généralement les canaux d'écoulement, les zones d'injection et les zones d'homogénéisation, sur chaque face d'une plaque bipolaire. Ce joint assure l'étanchéité de l'intérieur de la pile à combustible vis-à-vis de l'extérieur.

Le passage des réactifs d'un collecteur d'entrée vers un collecteur de sortie, à travers les canaux d'écoulement d'une zone réactive, induit une perte de charge dans cet écoulement. Ainsi, tout passage entre ces collecteurs qui court-circuite les canaux d'écoulement de la zone réactive induit un débit parasite de réactif significatif car ce passage peut présenter une perte de charge inférieure à celle des canaux d'écoulement de la zone réactive. Ce débit parasite ne participe pas à la réaction électrochimique.

À cet égard, tout espace entre la zone réactive et le joint périphérique est une source d'écoulement court-circuitant la zone réactive. Du fait des tolérances de fabrication de certains procédés industriels de réalisation des composants, par exemple pour l'assemblage ou la découpe des AME, il est nécessaire de maintenir des espaces périphériques significatifs entre le joint périphérique et la zone réactive. En particulier, un espace périphérique d'une largeur comprise entre 2 et 7 mm est le plus souvent nécessaire pour satisfaire les tolérances de positionnement et de fabrication de l'assemblage membrane-électrode et des tôles des plaques bipolaires.

Les écoulements de court-circuit sont également influencés par les modes d'écoulement des réactifs et du liquide de refroidissement, en particulier par leurs directions d'écoulement respectives. Soit les réactifs s'écoulent dans la même direction que le liquide de refroidissement. Alors, les espaces périphériques créant des écoulements de court-circuit pour le liquide de refroidissement et pour les réactifs sont positionnés sur les bordures latérales des plaques bipolaires. Soit les réactifs s'écoulent selon une direction perpendiculaire à celle du liquide de refroidissement. Alors, l'espace périphérique d'écoulement de liquide de refroidissement est positionné à l'aplomb des zones d'homogénéisation, de part et d'autre des extrémités des canaux d'écoulement de réactifs. Une difficulté est que toute altération d'une tôle pour limiter un écoulement de court-circuit impacte l'autre face de la tôle, et donc potentiellement les fonctionnalités de cette autre face de la tôle.

Les différents joints sont positionnés soit au sommet de nervures, soit dans des renfoncements des tôles. En fonction de la configuration des joints d'étanchéité, la section transversale d'un passage périphérique est plus ou moins élevée.

Dans le cas de joints positionnés dans des renfoncements des tôles, la section de passage dans les espaces périphériques pour les réactifs est relativement limitée. A contrario, on accroît la section de passage périphérique pour un écoulement de court-circuit du liquide de refroidissement entre les tôles.

Dans le cas de joints positionnés au sommet de nervures, la section transversale d'un passage périphérique est alors relativement élevée. Pour réduire l'écoulement parasite de réactif dans un espace périphérique, il est connu de réaliser une alternance de nervures et de renfoncements le long de ce passage. Cependant, cette solution réduit seulement de façon limitée l'écoulement parasite de réactif dans les espaces périphériques. Le document FR2887686 a proposé de réaliser un joint moulé sur une nervure pour remplir une partie des renfoncements du passage périphérique. Un tel joint moulé rend le procédé de fabrication nettement plus complexe et difficile à automatiser, ce qui peut accroître sensiblement le coût de fabrication. Par ailleurs, un tel joint peut fortement altérer l'écoulement du liquide de refroidissement.

Ces problèmes, bien connus pour des piles à combustibles, se posent aussi pour d'autres types de réacteurs électrochimiques à assemblages membranes-électrodes, tels que des électrolyseurs.

Le document WO2010/018656 traite de problèmes d'écoulement de liquide de refroidissement et décrit une plaque bipolaire, comportant des première et deuxième tôles conductrices. Ces tôles comportent des bossages ménagés répartis dans des zones d'inversion de sens d'écoulement dans une zone réactive.

Le document US2007/298308 décrit une structure de pile à combustible. Des plots en négatif et en positif sont formés dans des tôles d'une plaque bipolaire, dans une zone d'homogénéisation. Une zone intermédiaire plate est formée entre des canaux d'écoulement et un support de joint d'étanchéité.

L'invention vise à résoudre un ou plusieurs de ces inconvénients. L'invention porte ainsi sur une cellule électrochimique, comprenant:
- un assemblage membrane/électrodes incluant une membrane échangeuse de protons, des première et deuxième électrodes fixées sur des faces opposées de ladite membrane ;
- une plaque bipolaire, comportant des première et deuxième tôles conductrices, et dans laquelle :
   - un collecteur d'entrée et un collecteur de sortie de liquide de refroidissement, et un collecteur d'entrée et un collecteur de sortie d'un réactif sont ménagés à travers les première et deuxième tôles conductrices,
   - des canaux d'écoulement de liquide de refroidissement sont ménagés entre les tôles conductrices et sont en communication avec les collecteurs d'entrée et de sortie de liquide de refroidissement ;
   - une face externe de la première tôle conductrice comportant :
      - des canaux d'écoulement de réactif en communication avec les collecteurs d'entrée et de sortie de réactif, recouverts par la première électrode de l'assemblage membrane/électrodes ;
      - une première nervure s'étendant sur le côté des canaux d'écoulement de réactif, un joint d'étanchéité s'étendant au moins partiellement sur ladite première nervure ;
   - la plaque bipolaire comportant une zone intermédiaire s'étendant entre la première nervure et ladite première électrode, et comportant :
      - une première bande dans laquelle les première et deuxième tôles présentent des formes complémentaires emboitées l'une dans l'autre sur toute la longueur d'au moins un canal d'écoulement de liquide de refroidissement ;
      - une deuxième bande disposée entre la première bande et la première nervure, dans laquelle la première tôle comporte des reliefs en contact avec l'assemblage membrane/électrodes, et dans laquelle au moins un volume de stockage de liquide de refroidissement est ménagé entre les première et deuxième tôles.

L'invention permet de réduire l'écoulement de court-circuit pour le liquide de refroidissement et pour le réactif, tout en conservant un stockage de liquide de refroidissement en dehors de la zone réactive. On bloque l'écoulement entre les canaux d'écoulement de liquide de refroidissement de la zone réactive et des zones de stockage de liquide de refroidissement hors de la zone réactive.

L'invention porte également sur les variantes suivantes. L'homme du métier comprendra que chacune des caractéristiques des variantes suivantes peut être combinée indépendamment aux caractéristiques ci-dessus, sans pour autant constituer une généralisation intermédiaire.

Selon une variante, une direction reliant le collecteur d'entrée de liquide de refroidissement au collecteur de sortie de liquide de refroidissement est sensiblement parallèle à une direction reliant le collecteur d'entrée de réactif et le collecteur de sortie de réactif.

Selon encore une variante, l'assemblage membrane/électrodes comporte une couche de diffusion gazeuse recouvrant ladite première électrode et recouvrant partiellement ladite deuxième bande.

Selon une autre variante, lesdits reliefs incluent des surfaces plates dont la largeur et la longueur sont au moins égales à la largeur d'un canal d'écoulement de réactif.

Selon encore une variante, ladite zone intermédiaire inclut une troisième bande dans laquelle un volume est ménagé entre les première et deuxième tôles pour le liquide de refroidissement.

Selon encore une autre variante, ladite face externe de la première tôle comporte des deuxièmes nervures délimitant lesdits canaux d'écoulement de réactif, et dans laquelle la zone intermédiaire comporte des troisièmes nervures s'étendant entre une desdites deuxièmes nervures et la première nervure.

Selon une variante, les première et deuxième tôles forment, dans la deuxième bande, une alternance de volumes de stockage de liquide de refroidissement et de zones dans lesquelles les première et deuxième tôles sont en contact.

Selon une autre variante, une direction reliant le collecteur d'entrée de liquide de refroidissement au collecteur de sortie de liquide de refroidissement est sensiblement perpendiculaire à une direction reliant le collecteur d'entrée de réactif et le collecteur de sortie de réactif.

Selon encore une variante, la face externe de la première tôle comporte une zone d'homogénéisation de réactif ménagée entre un desdits collecteur de réactif et lesdits canaux d'écoulement de réactif, ladite zone intermédiaire étant ménagée dans la zone d'homogénéisation de réactif.

Selon encore une autre variante, la face externe de la première tôle comporte des premiers canaux d'homogénéisation de réactif délimités par des quatrièmes nervures respectives et dans laquelle la face externe de la deuxième tôle comporte des deuxièmes canaux d'homogénéisation de réactif délimités par des cinquième nervures respectives, lesdits premiers canaux d'homogénéisation s'étendant selon des directions différentes de celles des deuxièmes canaux d'homogénéisation, lesdits premiers canaux d'homogénéisation comportant des renfoncements formant des plots respectifs sur la face interne de la première tôle dans ladite première bande de la zone intermédiaire, lesdits plots étant logés dans le volume interne des cinquièmes nervures, lesdits deuxièmes canaux d'homogénéisation comportant des renfoncements formant des plots respectifs sur la face interne de la deuxième tôle dans ladite première bande de la zone intermédiaire, lesdits plots étant logés dans le volume interne des quatrième nervures.

Selon une variante, des plots d'homogénéisation sont ménagés sur les faces internes des première et deuxième tôles à l'aplomb de ladite zone d'homogénéisation, des plots d'homogénéisation des première et deuxième tôles étant en contact.

Selon une autre variante, ladite première nervure s'étend entre les collecteurs d'entrée et de sortie de réactif.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- la figure 3 est une vue en perspective d'une plaque bipolaire selon un mode de réalisation d'un premier aspect de l'invention ;
- la figure 4 est une vue en coupe transversale d'une nervure de la plaque de la figure 3 selon une première variante ;
- la figure 5 est une vue en coupe transversale au repos d'une nervure de la plaque de la figure 3 selon une deuxième variante ;
- la figure 6 est une vue en coupe transversale sous contrainte d'une nervure de la plaque la figure 3 selon la deuxième variante ;
- la figure 7 est une vue en coupe transversale au repos d'une nervure de la plaque la figure 3 selon une troisième variante ;
- les figures 8 et 9 sont des vues en perspective d'une plaque de la figure 3 selon la troisième variante, respectivement au repos et sous contrainte ;
- les figures 10 et 11 sont des vues en coupe longitudinale d'une nervure de la plaque de la figure 3 selon la troisième variante, respectivement au repos et sous contrainte ;
- les figures 12 à 14 sont des vues en coupe transversale fortement grossies ;
- la figure 15, une vue en perspective d'une plaque de la figure 3 selon une quatrième variante, au repos ;
- la figure 16 est une vue en perspective d'une plaque de la figure 3 selon une cinquième variante, au repos ;
- la figure 17 est une vue de dessus d'un exemple de configuration de pile à combustible utilisant une plaque bipolaire selon la figure 3 ;
- la figure 18 est une vue en coupe transversale éclatée d'une plaque de la figure 3 selon une sixième variante, au repos ;
- la figure 19 est une vue en coupe transversale d'un mode de réalisation d'une cellule électrochimique selon un deuxième aspect de l'invention ;
- la figure 20 est une vue en perspective éclatée d'une autre variante de la cellule électrochimique du deuxième aspect de l'invention ;
- la figure 21 est une vue de dessus schématique de différentes combinaisons de nervures selon un troisième aspect de l'invention ;
- la figure 22 est une vue de dessus d'un autre exemple de configuration de pile à combustible ;
- la figure 23 est une vue de dessus d'une première variante d'une plaque bipolaire d'une cellule électrochimique selon un quatrième aspect de l'invention ;
- les figures 24 à 29 sont des vues en coupe de la plaque bipolaire de la figure 23 ;
- la figure 30 est une vue en perspective éclatée de la plaque bipolaire de la figure 23 ;
- la figure 31 est une vue en coupe transversale de la plaque bipolaire de la figure 23 associée à un assemblage membrane/électrodes ;
- la figure 32 est une vue en perspective d'une tôle de la plaque bipolaire de la figure 23 ;
- la figure 33 est une vue en perspective éclatée d'une deuxième variante de plaque bipolaire d'une cellule électrochimique selon le quatrième aspect de l'invention ;
- la figure 34 est une vue de dessus de la plaque bipolaire de la figure 33 ;
- la figure 35 est une vue en section brisée de la plaque bipolaire de la figure 33 ;
- la figure 36 est une vue en perspective éclatée d'une troisième variante de plaque bipolaire d'une cellule électrochimique selon le quatrième aspect de l'invention ;
- la figure 37 est une vue en perspective éclatée d'une plaque bipolaire selon un cinquième aspect de l'invention ;
- les figures 38 et 39 sont respectivement des vues de dessus et de dessous de la plaque bipolaire de la figure 37 ;
- la figure 40 est une vue de côté éclatée de la plaque bipolaire de la figure 37 ;
- les figures 41 et 42 sont des vues en coupe éclatées selon deux plans de coupe différents ;
- la figure 43 est une vue en coupe transversale d'une zone intermédiaire de la plaque bipolaire de la figure 37 ;
- la figure 44 est une vue en coupe transversale d'une variante d'une zone intermédiaire d'une plaque bipolaire selon le cinquième aspect l'invention ;
- la figure 45 est une vue en coupe transversale d'une autre variante d'une zone intermédiaire d'une plaque bipolaire selon le cinquième aspect de l'invention.

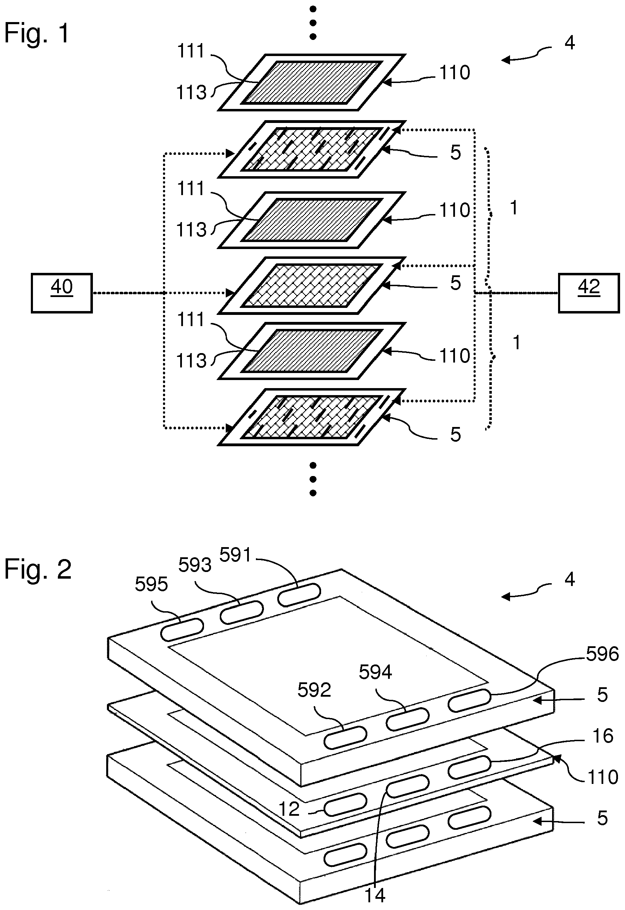

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode.

Entre chaque couple d'AME adjacents, une plaque bipolaire 5 est disposée. Chaque plaque bipolaire 5 définit des canaux d'écoulement anodiques et des canaux d'écoulement cathodiques sur des faces externes opposées. Des plaques bipolaires 5 définissent avantageusement également des canaux d'écoulement de liquide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant.

L'empilement peut également comprendre des joints d'étanchéité périphériques et des renforts de membrane non illustrés ici. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire.

De façon connue en soi, durant le fonctionnement de la pile à combustible 4, de l'air s'écoule entre un AME et une plaque bipolaire, et du dihydrogène s'écoule entre cet AME et une autre plaque bipolaire. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 4. L'empilement des plaques bipolaires 5 et des assemblages membrane/électrodes 110 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 110. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 596 sert par exemple pour former un collecteur d'évacuation de résidus de combustion et de carburant non utilisé, l'orifice 593 sert par exemple pour former un collecteur d'alimentation en liquide de refroidissement, l'orifice 594 sert par exemple pour former un collecteur d'évacuation de liquide de refroidissement, l'orifice 592 sert par exemple pour former un collecteur d'alimentation en comburant, et l'orifice 595 sert par exemple pour former un collecteur d'évacuation d'eau produite et de comburant non utilisé.

Les orifices des plaques bipolaires 5 et des assemblages membrane/électrodes 110 sont disposés en vis-à-vis afin de former les différents collecteurs d'écoulement. Des orifices 12, 14 et 16 sont par exemple ménagés dans les assemblages membrane/électrodes 110 et sont disposés en vis-à-vis respectivement des orifices 592, 594 et 596. Dans un but de simplification, l'orifice 596 sera assimilé à un collecteur d'évacuation de résidus de combustion de l'empilement.

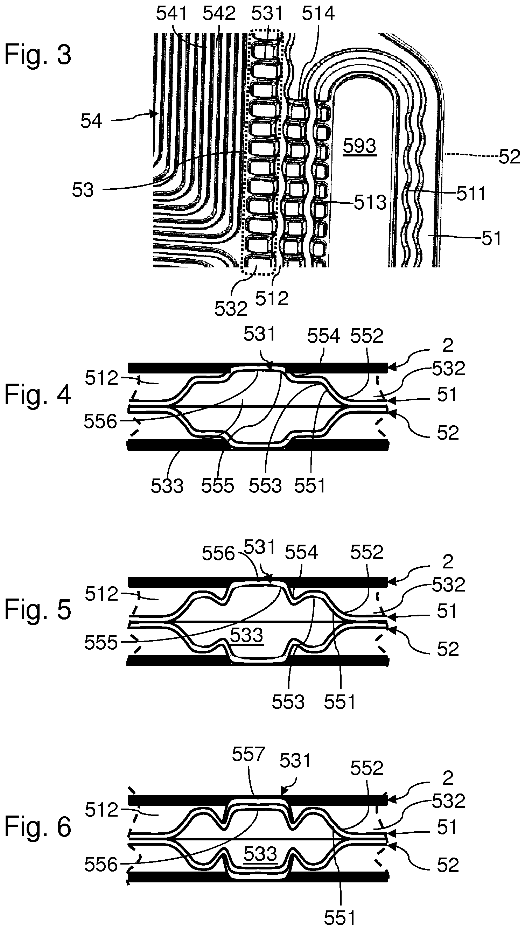

La figure 3 est une vue en perspective d'un détail de la face supérieure d'une plaque bipolaire 5 selon un mode de réalisation d'un premier aspect de l'invention. La plaque bipolaire 5 comporte des tôles conductrices 51 et 52 solidarisées. Les tôles conductrices 51 et 52 sont typiquement formées de tôles métalliques, par exemple des tôles métalliques embouties. Les tôles 51 et 52 sont par exemple formées en acier inoxydable. Les tôles 51 et 52 sont par exemple solidarisées par soudage. Des canaux d'écoulement de liquide de refroidissement sont ménagés entre les tôles 51 et 52 et sont en communication avec les collecteurs 593 et 594. L'étanchéité des canaux d'écoulement de liquide de refroidissement peut être obtenue par des soudures entre les tôles 51 et 52.

La face externe de la tôle 51 comporte des nervures 542 délimitant des canaux d'écoulement 541 pour un réactif, par exemple le carburant. Les canaux d'écoulement 541 sont ici destinés à mettre en communication les collecteurs 591 et 596. La zone comprenant les canaux d'écoulement 541 correspond à la zone réactive 54 de la cellule électrochimique.

La face externe de la tôle 51 comporte également une nervure 512 s'étendant entre les collecteurs 591 et 596. La nervure 512 est destinée à former un support pour un joint d'étanchéité (non illustré ici) et s'étendant entre le collecteur 591 et 596. La nervure 512 et le joint d'étanchéité sont destinés à empêcher les fuites de carburant hors de la cellule électrochimique.

La face externe de la tôle 51 comporte également une zone intermédiaire 53, positionnée entre la nervure 512 et une nervure 542 de la périphérie de la zone réactive. La zone intermédiaire 53 est destinée à recevoir un débordement de la membrane 113 ou un débordement d'une couche de diffusion gazeuse au-delà de la zone réactive. La largeur de la zone intermédiaire 53 est destinée à tenir compte des différentes tolérances de fabrication et d'assemblage, par exemple les tolérances de positionnement de la membrane 113 ou d'une couche de diffusion gazeuse, ou des tolérances liées à l'emboutissage d'une tôle. La zone intermédiaire 53 comporte une alternance de nervures 531 et de renfoncements 532. Les nervures 531 s'étendent entre la nervure 512 et la nervure 542 de la périphérie de la zone réactive. Les nervures 531 s'étendent perpendiculairement à un axe reliant des collecteurs 591 et 596. Dans cet exemple, les nervures 531 s'étendent perpendiculairement à la nervure 512, et perpendiculairement à la nervure 542 de la périphérie de la zone réactive. Un contact entre les tôles 51 et 52 est réalisé dans les renfoncements 532.

La face externe de la tôle 51 comporte également une nervure 511 entourant le collecteur 593. Cette nervure 511 est destinée à former un support pour un joint d'étanchéité entourant le collecteur 593. Des nervures 513 permettent un écoulement de liquide de refroidissement depuis le collecteur 593 jusque sous la nervure 511. La face externe de la tôle 51 comporte également des nervures 514 s'étendant entre la nervure 512 et la nervure 513. Les nervures 514 permettent un écoulement de liquide de refroidissement entre la face interne de la nervure 513 et la face interne de la nervure 512. Les nervures 531 permettent un écoulement du liquide de refroidissement depuis la face interne de la nervure 512 jusque dans les canaux d'écoulement de liquide de refroidissement, disposés à l'aplomb de la zone réactive.

La zone intermédiaire 53 est une zone sujette à des courts circuits de réactif. Les nervures 531 permettent de réduire la section de passage potentielle pour les réactifs, même avec un débordement réduit de la couche de diffusion gazeuse ou de la membrane dans la zone 53. Afin de limiter encore la section de passage pour les réactifs, les nervures 531 présentent une hauteur supérieure à celle des nervures 542. Ainsi, un débordement de la couche de diffusion gazeuse ou de la membrane dans la zone 53 est comprimé, de façon à participer à l'obturation du court circuit dans cette zone 53. La hauteur de chaque nervure sera définie comme la distance mesurée depuis un plan médian dans lequel les tôles 51 et 52 sont en contact, jusqu'au sommet de cette nervure.

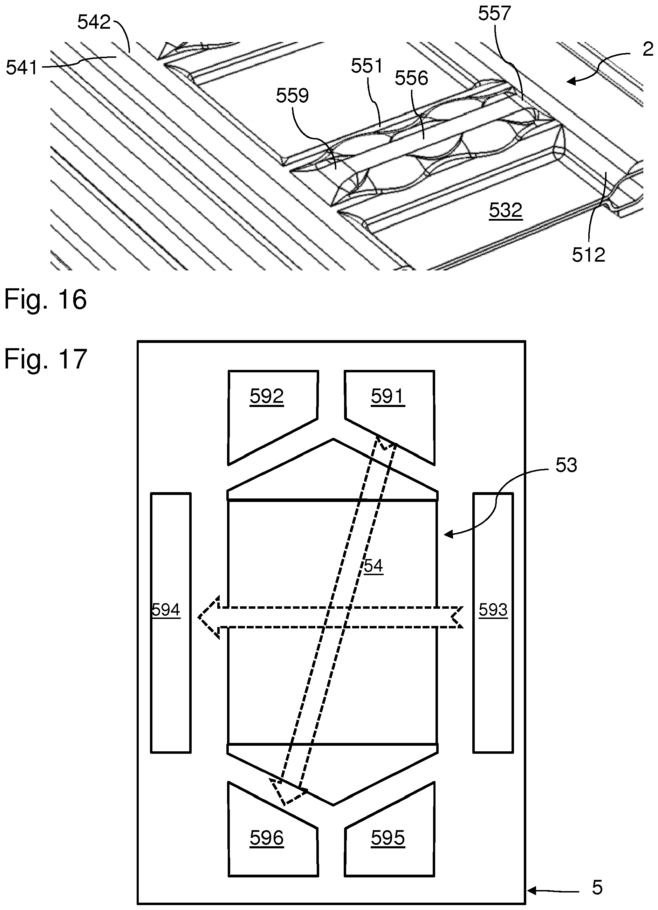

Dans cet exemple, la direction générale d'écoulement de réactif (définie par une droite reliant les collecteurs 591 et 596) est perpendiculaire à la direction d'écoulement de liquide de refroidissement (définie par une droite reliant les collecteurs 593 et 594), comme illustré à la figure 17. Une zone intermédiaire est ici référencée schématiquement, en l'absence d'illustration de joints périphériques.

Il est souhaitable de limiter la compression sur un débordement de la couche de diffusion gazeuse ou de la membrane 113 dans la zone 53, pour éviter des risques de rupture de la membrane par augmentation de contraintes de cisaillement interne, ou pour éviter une augmentation importante de la conductivité de la couche de diffusion gazeuse dans le débordement, à même de créer des hétérogénéités locales de densité de courant. A cet effet, les nervures 531 sont flexibles, de sorte qu'une pression appliquée sur leur sommet rapproche ce sommet du plan médian entre les tôles 51 et 52.

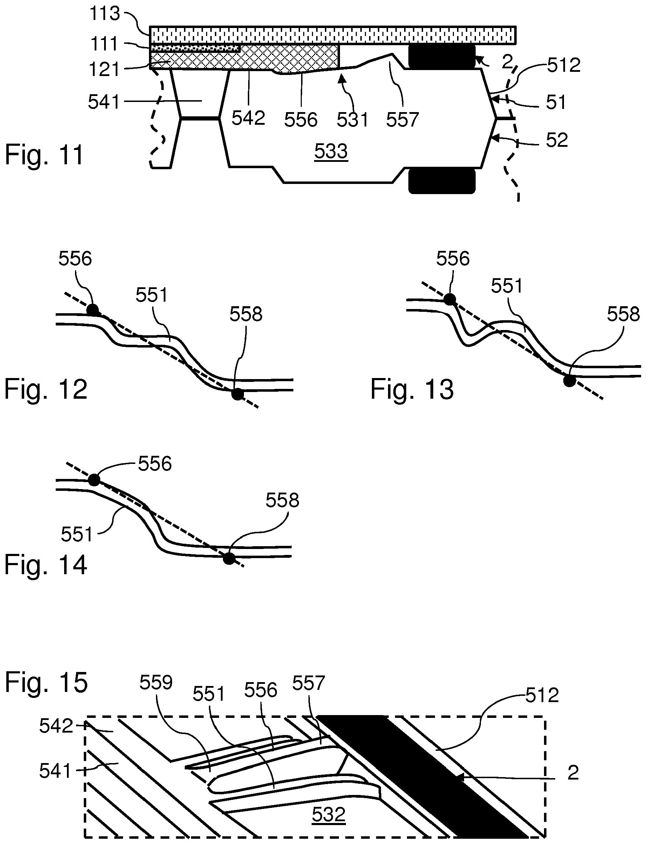

Des nervures 531 selon différentes variantes sont illustrées en coupe transversale aux figures 4 à 7, au niveau de leur partie médiane. La géométrie de ces nervures 531 est davantage détaillée aux figures 12 à 14. Toutes ces nervures présentent un sommet 556. Chaque nervure 531 présente des jonctions 551 avec les renfoncements 532 adjacents, positionnés de part et d'autre de cette nervure 531. Le point 558 illustre le point de contact, entre la tôle 51 et la tôle 52, le plus proche du sommet 556. Pour favoriser la flexion de la nervure 531, au moins une partie de chaque jonction 551 est disposée en retrait par rapport à une droite reliant le sommet 556 à ce point de contact le plus proche 558.

Les nervures 531 présentent avantageusement des sections transversales vérifiant cette définition sur au moins 50 % de leur longueur, avantageusement sur au moins 70 % de leur longueur, afin de favoriser leur déformation lors d'une pression appliquée sur leur sommet.

L'exemple illustré à la figure 4 correspond à une première variante de nervure 531. La nervure 531 illustrée ici est au repos, en l'absence de sollicitation sur son sommet 556. Dans cette variante, chaque jonction 551 présente une première courbure 552, une deuxième courbure 553, une troisième courbure 554 et une quatrième courbure 555. Les courbures 552 à 555 sont raccordées par des parties sensiblement rectilignes non référencées. Chaque jonction 551 présente un point d'inflexion entre ses courbures successives. Ainsi, comme illustré dans cette variante, les jonctions 551 présentent avantageusement au moins trois points d'inflexion, afin de favoriser un enfoncement du sommet 556 lorsqu'on lui applique une pression, par flexion de la nervure 531.

La nervure 531 illustrée ici comporte un sommet 556 plat. Avantageusement, comme illustré dans cette variante, une nervure 531 présente un sommet 556 plat sur au moins 25 % de sa largeur, pour fournir une bonne surface d'appui à une membrane ou à une couche de diffusion gazeuse.

Pour favoriser un enfoncement homogène des nervures 531 lors de l'application d'une pression sur leur sommet 556, leur section transversale présente avantageusement un axe de symétrie, comme illustré dans cette variante. Avantageusement, les nervures 531 présentent une forme d'extrusion sur leur partie médiane, c'est-à-dire une forme allongée de section constante.

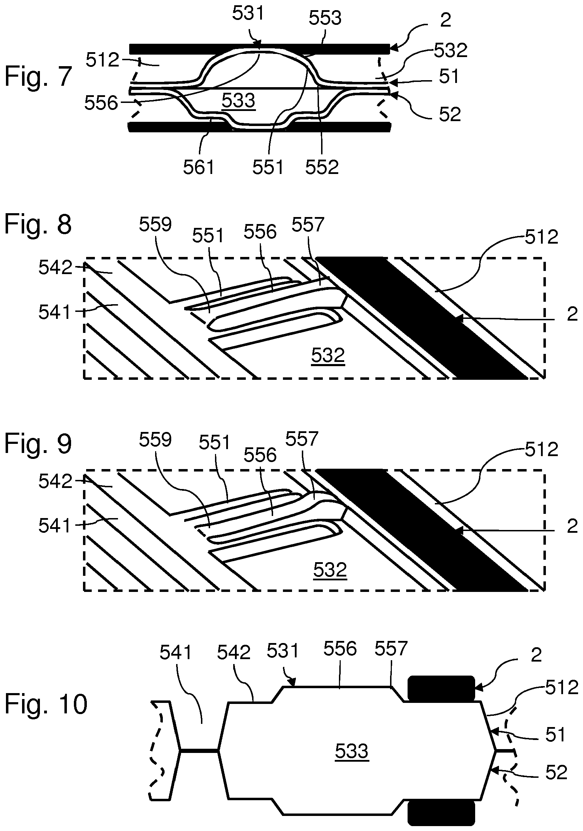

L'exemple illustré à la figure 5 correspond à une deuxième variante de nervure 531, ici illustrée au repos. Cette configuration est également illustrée en perspective à la figure 8 et en coupe longitudinale à la figure 10. La figure 6 correspond à cette même nervure 531 lors de l'application d'une pression sur son sommet 556. Cette configuration est également illustrée en perspective à la figure 9 est en coupe longitudinale à la figure 11. Dans cette variante, chaque jonction 551 présente une première courbure 552, une deuxième courbure 553, une troisième courbure 554 et une quatrième courbure 555. Les courbures 552 à 555 sont raccordées par des parties courbes non référencées. Ainsi, les jonctions 551 incluent chacune au moins une forme de S. Une telle forme favorise un enfoncement du sommet 556 lorsqu'on lui applique une pression, pour prendre par exemple la configuration illustrée aux figures 6 et 11.

La nervure 531 comporte une extrémité 557 par laquelle elle est raccordée la nervure 512, et une extrémité 559 par laquelle elle est raccordée à la nervure 542. Les extrémités 557 et 559 peuvent former des zones de transition permettant de passer progressivement de la hauteur des nervures 512 et 542 respectivement, jusqu'à la hauteur de la partie médiane de la nervure 531. L'extrémité 559 peut former une zone de transition progressive sur une longueur avantageusement comprise entre 2 et 10 fois Δh, Δh étant la différence de hauteur au repos entre la nervure 531 et les nervures 542. L'extrémité 559 peut former une zone de transition progressive d'une longueur plus réduite que l'extrémité 557, afin de limiter au maximum l'écoulement dans la zone 53. Cette zone de transition progressive de l'extrémité 557 peut présenter avantageusement une longueur comprise entre 1 et 5 fois Δh.

Une nervure 531 trop large au niveau de sa jonction avec la nervure 512 peut altérer la résistance mécanique de cette nervure 512. Dans la variante illustrée à la figure 8, des jonctions 551 de la nervure 531 sont interrompues avant d'atteindre la nervure 512. Une distance comprise entre 1 et 5 fois Δh peut par exemple être ménagée entre les jonctions 551 et la nervure 512.

La figure 11 illustre notamment l'enfoncement partiel de la nervure 531 par un assemblage membrane/électrodes comportant une couche de diffusion gazeuse 121. La couche de diffusion gazeuse 121 comporte un débordement à l'aplomb de la zone 53. Au niveau du débordement, la compression appliquée sur la partie médiane de la nervure 531 par la couche de diffusion gazeuse 121 permet d'enfoncer cette partie médiane de la nervure 531, ce qui permet de préserver la membrane 113 et la couche de diffusion gazeuse 121. Dans l'exemple, la partie médiane de la nervure 531 est enfoncée jusqu'à être plus basse que la nervure 542 notamment. Au-delà du débordement, l'extrémité 557 de la nervure 531 reste plus haute que les nervures 512 et 542 et favorise l'obturation de la zone 53. Chaque jonction 551 présente un point d'inflexion entre ses courbures successives.

Dans cette variante, la courbure 553 forme un sommet local qui présente avantageusement la même hauteur que les nervures 542. Ainsi, la courbure 553 participe également au blocage d'un écoulement de fluide dans la zone 53.

L'exemple illustré à la figure 7 correspond à une troisième variante de nervure 531, ici illustrée au repos. Selon cette variante, chaque jonction 551 présente une première courbure 552 et une deuxième courbure 553.

Afin de favoriser un enfoncement du sommet 556 lorsqu'on lui applique une pression, la première courbure 552 et une partie du renfoncement 532 adjacent sont positionnés en porte-à-faux par rapport au point de contact 558. Cette première courbure 552 et cette partie du renfoncement 532 ne sont pas supportées directement par la tôle 52. Cela permet un enfoncement de la nervure 531 dans une nervure 561 de la tôle 52 positionnée en vis-à-vis, lors de l'application d'une pression sur cette nervure 531. À cet effet, la nervure 561 présente ici une largeur plus importante que la nervure 531 et n'est donc pas le symétrique de cette nervure 531 par rapport au plan médian. Une plus grande rigidité des nervures 561 peut par exemple être recherchée.

La figure 15 est une vue en perspective d'une autre variante, dans laquelle les jonctions 551 s'étendent jusqu'à la nervure 512. Mais dans cette variante, les extrémités des jonctions 551 se séparent de la nervure 531 et bifurquent latéralement. Ainsi, la nervure 531 comporte plusieurs jonctions indépendantes avec la nervure 512, ce qui permet de rigidifier celle-ci. Avantageusement, les jonctions 551 se séparent de la nervure 531 à partir d'une distance comprise entre 2 et 10 fois Δh.

La figure 16 est une vue en perspective d'une autre variante, dans laquelle la partie médiane de chaque nervure 531 comporte des sections transversales différentes. Chaque nervure 531 présente deux tronçons un peu plus rigides positionnés respectivement entre le centre de la nervure et l'extrémité 557, et entre le centre de la nervure 531 et l'extrémité 559. Au niveau de son centre, la nervure 531 présente une section transversale présentant une inertie moindre, pour présenter une moins grande rigidité. Ainsi, en fonction de la longueur de débordement d'une couche de diffusion gazeuse au-dessus de la zone 53, un enfoncement de la nervure 531 au niveau de l'extrémité 559 n'entraine pas forcément d'enfoncement de la nervure 531 au niveau de l'extrémité 557. Ainsi, si le débordement de la couche de diffusion gazeuse ne dépasse pas le centre de la nervure 531, cette nervure 531 n'est que peu fléchie au niveau de l'extrémité 557, ce qui permet de garantir une obturation optimale de l'écoulement dans la zone 53.

Dans les exemples qui précèdent, on a détaillé la géométrie de la tôle 51. Une telle géométrie de tôle s'avère particulièrement appropriée pour des canaux d'écoulement 541 de carburant dihydrogène, dont la viscosité est très faible, le dihydrogène étant ainsi particulièrement affecté par un débit de court-circuit. Bien que non détaillé, la tôle 52 peut présenter une géométrie similaire à la tôle 51, avec une alternance de nervures flexibles et de renfoncements dans une zone intermédiaire, comme détaillé précédemment pour la tôle 51. Dans les variantes illustrées aux figures 4 à 6, des nervures de la tôle 52 sont le symétrique de nervures 531 par rapport au plan médian de la plaque bipolaire 5.

Avantageusement, les nervures 531 sont réparties de façon uniforme dans la zone 53. Avantageusement, la largeur des renfoncements 532 est au moins égale à la largeur des nervures 531. Avantageusement, la largeur des renfoncements 532 est au plus égale à 2 fois la largeur des nervures 531.

La largeur des nervures 531 pourra avantageusement être comprise entre 1 et 3mm. La largeur de la zone 53 pourra avantageusement être comprise entre 3 et 7mm.

Δh sera avantageusement au moins égale à la moitié de l'épaisseur EpGdl de la couche de diffusion gazeuse 121, et au plus égale à trois fois EpGdl. Avantageusement, Δh est comprise entre 0,9* EpGdl et 1,1* EpGdl. Δh peut être exprimé comme la valeur moyenne sur la longueur de la nervure 531, la nervure 531 pouvant présenter une hauteur non homogène sur sa longueur.

Dans les exemples illustrés aux figures 4 à 14, un joint d'étanchéité 2 est positionné en contact sur la nervure 512. Le joint 2 pourra être par exemple un joint plat ou un joint sérigraphié sur la nervure 512. Le joint 2 peut être par exemple en contact avec la membrane 113 comme illustré aux figures 10 et 11, ou être avec un contact avec un renfort non illustré, fixé à la périphérie de la membrane 113.

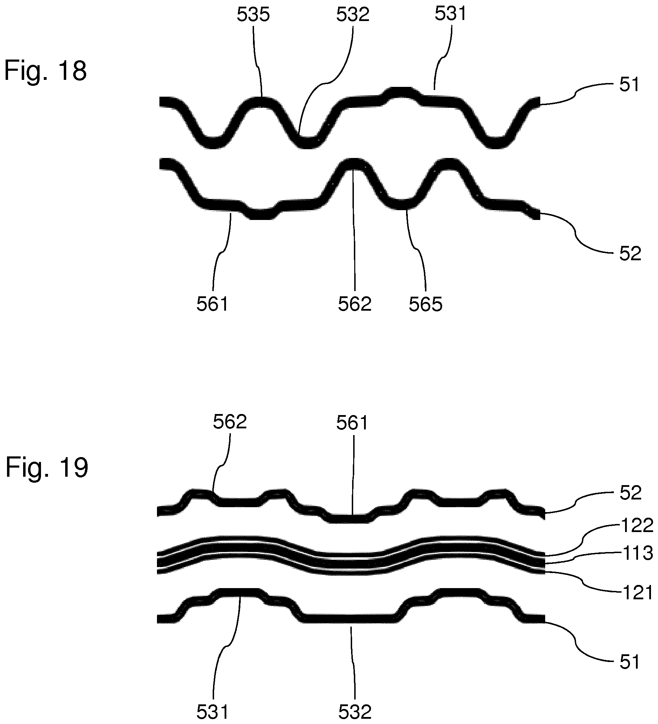

La figure 18 est une vue en coupe transversale éclatée (pour plus de lisibilité) au niveau de nervures 531 d'une autre variante du premier aspect de l'invention. Les points de contact entre une nervure 531 et la tôle 52 sont ici logés à l'intérieur même de la nervure 531. Ces points de contact sont donc surélevés par rapport à un plan médian des tôles 51 et 52. La position de ces points de contact et la géométrie des nervures 531 satisfont le premier aspect de l'invention, avec au moins une partie de chaque jonction disposée en retrait par rapport à une droite reliant le sommet d'une nervure 531 au point de contact le plus proche avec la tôle 52. On favorise ainsi la flexion de la nervure 531.

La tôle 52 comporte une zone intermédiaire superposée à la zone intermédiaire 53. La zone intermédiaire de la tôle 52 comporte une alternance de nervures 561 et de renfoncements 562. La tôle 52 comporte également des canaux d'écoulement de réactif non illustrés, délimités par des nervures. Un contact entre les tôles 51 et 52 est réalisé dans les renfoncements 532, ainsi que dans les renfoncements 562. Au niveau des renfoncements 532, des nervures secondaires 535 sont ménagées. Ces nervures secondaires 535 présentent une certaine rigidité par rapport à un enfoncement. Les nervures secondaires 535 ménagent également un espace permettant l'enfoncement de la partie médiane d'une nervure 531. Au niveau des renfoncements 562, des nervures secondaires 565 sont ménagées. Les nervures secondaires 565 présentent une certaine rigidité par rapport à un enfoncement. Les nervures secondaires 565 ménagent également un espace permettant l'enfoncement de la partie médiane d'une nervure 531. Cette variante permet notamment d'accroître la rigidité des nervures de support de joint.

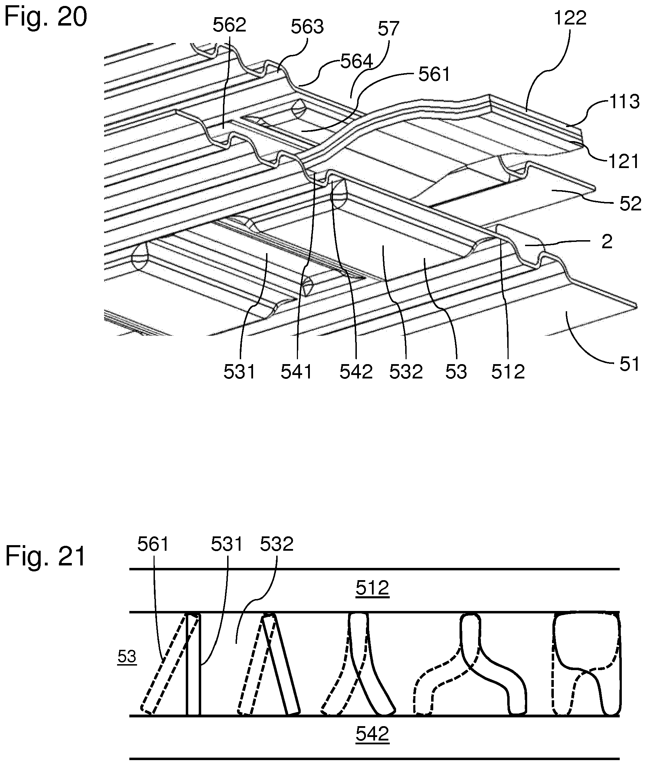

Selon un deuxième aspect de l'invention illustré aux figures 19 et 20, l'invention porte également sur une cellule électrochimique comportant un assemblage membrane/électrodes comprimé entre deux plaques bipolaires.

Selon ce second aspect de l'invention, des cellules électrochimiques comportent également des plaques bipolaires 5. Chaque plaque bipolaire 5 comporte des tôles conductrices 51 et 52 solidarisées. Les tôles conductrices 51 et 52 peuvent également être formées de tôles métalliques embouties solidarisées par soudage. Des canaux d'écoulement de liquide de refroidissement sont ménagés entre les tôles 51 et 52 et sont en communication avec des collecteurs d'entrée et sortie de liquide de refroidissement tels que détaillés précédemment.

Une première variante de ce deuxième aspect de l'invention est illustrée à la figure 19, dans une vue en coupe transversale à travers des nervures 531. Les premier et deuxième aspects de l'invention sont combinés dans cet exemple. Comme dans les exemples détaillés précédemment, la face externe de la tôle 51 comporte des nervures 542 délimitant des canaux d'écoulement 541 pour un réactif. Ces canaux d'écoulement 542 sont destinés à mettre en communication des collecteurs d'entrée et sortie de réactif, tels que détaillés précédemment.

Comme dans les exemples détaillés précédemment, la face externe de la tôle 51 comporte également une nervure 512 s'étendant entre les collecteurs de réactif, cette nervure étant destinée à former un support pour un joint d'étanchéité 2 et s'étendant entre ces collecteurs de réactif.

La face externe de la tôle 51 comporte également une zone intermédiaire 53, positionnée entre la nervure 512 de support de joint et une nervure 542 de la périphérie de la zone réactive. La zone intermédiaire 53 est une zone sujette à des courts circuits de réactif. La zone intermédiaire 53 est ici aussi destinée à recevoir un débordement de la membrane 113 ou un débordement d'une couche de diffusion gazeuse 121 ou 122 au-delà de la zone réactive.

La largeur de la zone intermédiaire 53 est également destinée à tenir compte des différentes tolérances de fabrication et d'assemblage, par exemple les tolérances de positionnement de la membrane 113 ou d'une couche de diffusion gazeuse, ou des tolérances liées à l'emboutissage d'une tôle. La zone intermédiaire 53 comporte une alternance de nervures 531 et de renfoncements 532, comme dans les exemples précédents. Les nervures 531 s'étendent entre la nervure 512 et la nervure 542 de la périphérie de la zone réactive. Les nervures 531 s'étendent perpendiculairement à un axe reliant les collecteurs de réactif. Dans cet exemple, les nervures 531 s'étendent perpendiculairement à la nervure 512, et perpendiculairement à la nervure 542 de la périphérie de la zone réactive. Un contact entre les tôles 51 et 52 est réalisé dans les renfoncements 532. Les nervures 531 permettent de réduire la section de passage potentielle pour les réactifs, même avec un débordement réduit de la couche de diffusion gazeuse ou de la membrane dans la zone 53.

Le débordement de L'AME dans la zone 53 comporte une ondulation par ses contacts alternés avec des nervures 531 et 561 des tôles 51 et 52 respectivement. La tôle 52 comporte une nervure de support d'un joint. La tôle 52 comporte une zone intermédiaire (non référencée) superposée à la zone intermédiaire 53. La zone intermédiaire de la tôle 52 comporte une alternance de nervures 561 et de renfoncements 562. La tôle 52 comporte également des canaux d'écoulement de réactif délimités par des nervures. Les nervures 561 s'étendent entre la nervure de support de joint et la nervure 562 de la périphérie de la zone réactive.

Afin de limiter une éventuelle surcompression de la membrane 113 (ou le cas échéant d'un renfort) dans la zone 53, en particulier lorsque le débordement de la couche de diffusion gazeuse est proche de la nervure 512, le deuxième aspect de l'invention propose de disposer chaque nervure 531 d'une tôle 51 d'une plaque bipolaire 5 en regard d'un renfoncement 562 plus large ménagé dans une tôle 52 d'une autre plaque bipolaire. Une nervure 561 de la tôle 52 de l'autre plaque bipolaire 5 est en regard d'un renfoncement 532 de la tôle 51. Une telle configuration vise à créer un contact du débordement de l'AME 110 dans la zone 53, avec une alternance de nervures 531 et de nervures 561, afin de limiter la section de passage dans la zone 53. De telles nervures 531 et 561 permettent de générer une ondulation sur le débordement de l'AME 110, plutôt qu'une compression excessive de celui-ci.

Les points de contact entre une nervure 531 et la tôle 562 sont ici logés à l'intérieur même de la nervure 531. Ces points de contact sont donc surélevés par rapport à un plan médian des tôles 51 et 52. La position de ces points de contact et la géométrie des nervures 531 satisfont le premier aspect de l'invention, avec au moins une partie de chaque jonction disposée en retrait par rapport à une droite reliant le sommet d'une nervure 531 au point de contact le plus proche. On favorise ainsi la flexion de la nervure 531.

Afin de permettre une ondulation du débordement de l'AME :
- chaque nervure 531 est en vis-à-vis d'un renfoncement 562 de plus grande largeur ;
- chaque nervure 561 est en vis-à-vis d'un renfoncement 532 de plus grande largeur ;
- la hauteur des nervures 531 est supérieure à la hauteur des nervures 542 ;
- la hauteur des nervures 561 est supérieure à la hauteur des nervures délimitant les canaux d'écoulement de la tôle 52 ;

Afin de limiter les contraintes sur le débordement de l'AME, avantageusement :
- l'espace entre une nervure 531 et un renfoncement 562 est supérieur à l'épaisseur du débordement de l'AME ;
- l'espace entre une nervure 561 et un renfoncement 532 est supérieur à l'épaisseur du débordement de l'AME ;

La figure 20 est une vue en perspective éclatée (pour plus de lisibilité) de dessous d'une autre variante du deuxième aspect de l'invention. On peut distinguer un débordement d'une AME disposé dans une zone 53 entre une tôle 51 et une tôle 52 de deux plaques bipolaires 5 adjacentes. L'AME comporte une ondulation par ses contacts alternés avec des nervures 531 et 561 des tôles 51 et 52 respectivement. La tôle 52 comporte une nervure de support d'un joint. La tôle 52 comporte une zone intermédiaire 57 superposée à la zone intermédiaire 53. La zone intermédiaire comporte une alternance de nervures 561 et de renfoncements 562. La tôle 52 comporte également des canaux d'écoulement de réactif 563 délimités par des nervures 564. Les nervures 561 s'étendent entre la nervure de support de joint et la nervure 562 de la périphérie de la zone réactive.

Afin de permettre une ondulation du débordement de l'AME :
- chaque nervure 531 est en vis-à-vis d'un renfoncement 562 de plus grande largeur ;
- chaque nervure 561 est en vis-à-vis d'un renfoncement 532 de plus grande largeur ;
- la hauteur des nervures 531 est supérieure à la hauteur des nervures 542 ;
- la hauteur des nervures 561 est supérieure à la hauteur des nervures 564 ;

Afin de limiter les contraintes sur le débordement de l'AME, avantageusement :
- l'espace entre une nervure 531 et un renfoncement 562 est supérieur à l'épaisseur du débordement de l'AME ;
- l'espace entre une nervure 561 et un renfoncement 532 est supérieur à l'épaisseur du débordement de l'AME ;

Un troisième aspect de l'invention est illustré à la figure 21, correspondant à une vue de dessus schématique de différentes configurations de nervures 531 (trait plein) et 561 (trait discontinu) des tôles 51 et 52. Selon ce troisième aspect de l'invention, les nervures 531 et 561 ne sont pas superposées au niveau de leur extrémité disposée du côté de la nervure 542. On peut ainsi créer une ondulation d'une partie d'un débordement de l'AME dans la zone intermédiaire 53. Les nervures 531 sont par contre superposées au niveau de leur extrémité disposée du côté de la nervure 512, afin de limiter la section de passage de court-circuit dans la zone intermédiaire 53, si le débordement n'atteint pas cette superposition. Une éventuelle surcompression d'un débordement atteignant par contre la superposition de nervures n'est induite qu'à proximité de la nervure 512. Les nervures 531 et/ou les nervures 561 peuvent reprendre les différentes caractéristiques détaillées en référence aux autres variantes du premier aspect de l'invention.

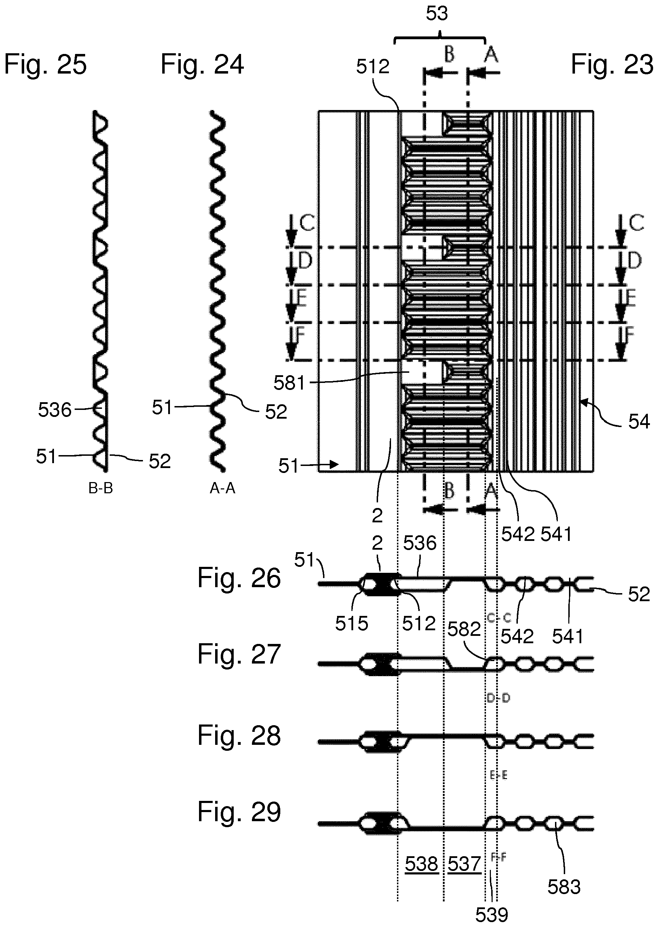

Selon un quatrième aspect de l'invention, illustré aux figures 23 à 36, l'invention porte également sur une cellule électrochimique comportant un assemblage membrane/électrodes comprimé entre deux plaques bipolaires. Selon le quatrième aspect de l'invention, on cherche à réduire l'écoulement de court-circuit pour le liquide de refroidissement et pour le réactif, tout en conservant un stockage de liquide de refroidissement en dehors de la zone réactive. Selon le quatrième aspect de l'invention, on bloque l'écoulement entre les canaux d'écoulement de liquide de refroidissement de la zone réactive et des zones de stockage de liquide de refroidissement hors de la zone réactive.

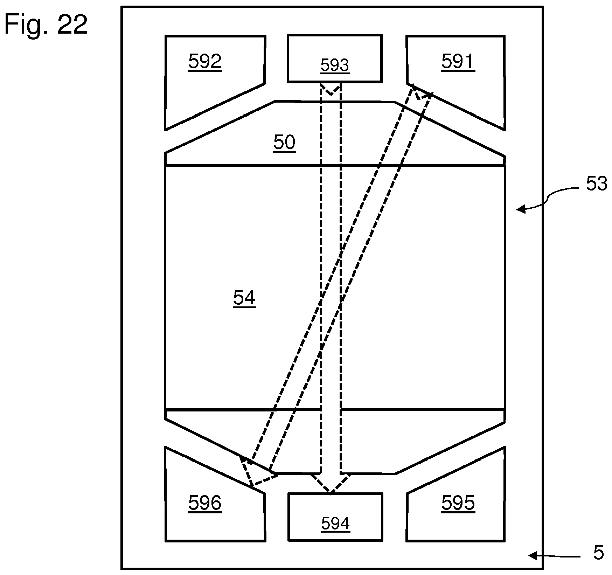

Dans la configuration illustrée en vue de dessus à la figure 22, l'écoulement de liquide de refroidissement est sensiblement parallèle à l'écoulement de réactifs. Dans ce cas de figure, selon l'état de la technique, un écoulement de liquide de refroidissement de court-circuit intervient à l'aplomb de la zone intermédiaire 53, de même qu'un écoulement de court-circuit de réactif.

Selon ce quatrième aspect de l'invention, des cellules électrochimiques comportent également des plaques bipolaires 5. Chaque plaque bipolaire 5 comporte des tôles conductrices 51 et 52 solidarisées. Les tôles conductrices 51 et 52 peuvent également être formées de tôles métalliques embouties solidarisées par soudage. Des canaux d'écoulement de liquide de refroidissement sont ménagés entre les tôles 51 et 52 et sont en communication avec des collecteurs d'entrée et sortie de liquide de refroidissement tels que détaillés précédemment. Dans le quatrième aspect de l'invention, chaque plaque bipolaire 5 comporte une zone intermédiaire entre une électrode recouvrant des canaux d'écoulement de réactifs, et une nervure s'étendant entre les collecteurs d'entrée et de sortie de réactif et sur laquelle un joint est disposé. Dans cette zone intermédiaire :
- les tôles 51 et 52 présentent des formes complémentaires emboîtées l'une dans l'autre sur toute la longueur d'au moins un canal d'écoulement de liquide de refroidissement, selon une première bande ;
- la tôle 51 comporte des reliefs en contact avec l'assemblage membrane/électrodes, pour former une deuxième bande disposée entre la première bande et la nervure de support de joint. Un volume de stockage de liquide de refroidissement est ménagé entre les tôles 51 et 52 dans cette deuxième bande.

Une première variante du quatrième aspect de l'invention, correspondant à la configuration illustrée à la figure 22, est illustrée aux figures 23 à 32. La direction d'écoulement de liquide de refroidissement est ici sensiblement parallèle à la direction d'écoulement des réactifs.

La face externe de la tôle 51 comporte des nervures 542 délimitant des canaux d'écoulement 541 pour un réactif, par exemple le carburant. Les canaux d'écoulement 541 sont ici destinés à mettre en communication les collecteurs 591 et 596. La zone comprenant les canaux d'écoulement 541 correspond à la zone réactive 54 de la cellule électrochimique.

La face externe de la tôle 51 comporte également des nervures 512 et 515 s'étendant entre les collecteurs 591 et 596. Les nervures 512 et 515 sont destinées à former un support pour un joint d'étanchéité 2 et s'étendant entre les collecteurs 591 et 596. Le joint d'étanchéité 2 est ici à cheval sur les nervures 512 et 515, ainsi que dans une gorge ménagée entre les nervures 512 et 515.

La face externe de la tôle 51 comporte également une zone intermédiaire 53, positionnée entre la nervure 512 et une nervure 542 de la périphérie de la zone réactive 54.

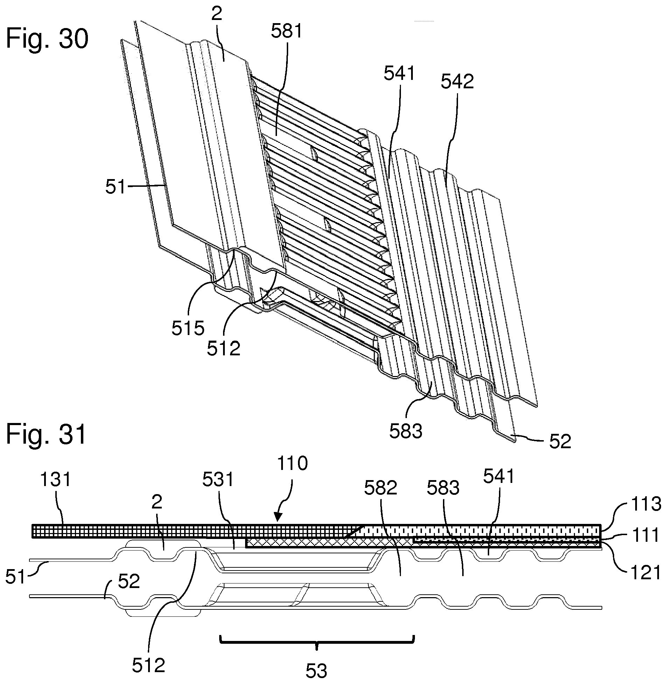

La zone intermédiaire 53 est destinée à recevoir un débordement de la membrane 113 ou un débordement d'une couche de diffusion gazeuse au-delà de la zone réactive. La figure 31 est une vue en coupe éclatée illustrant une plaque bipolaire 5 associée à un exemple d'assemblage membrane/électrodes 110. L'assemblage membrane/électrodes 110 comporte de façon connue en soi une membrane 113 sur laquelle une électrode 111 est fixée. L'électrode 111 est recouverte par une couche de diffusion gazeuse 121. Un renfort 131 est fixé à la périphérie de la membrane 113. Le renfort 131 est en contact avec le joint 2. Comme illustré à la figure 31, la couche de diffusion gazeuse 121 comporte un débordement à l'aplomb de la zone intermédiaire 53. L'électrode 111 est disposée à l'aplomb des canaux d'écoulement 541 de la zone réactive 54.

La largeur de la zone intermédiaire 53 est destinée à tenir compte des différentes tolérances de fabrication et d'assemblage, par exemple les tolérances de positionnement de la membrane 113 ou de la couche de diffusion gazeuse 121, ou des tolérances liées à l'emboutissage d'une tôle. La zone intermédiaire 53 s'étend de la nervure 512 jusqu'à l'électrode 111. Des canaux d'écoulement de liquide de refroidissement 583 sont ménagés entre les tôles 51 et 52 à l'aplomb de la zone réactive 54. Les canaux d'écoulement de liquide de refroidissement 583 sont en communication avec les collecteurs 593 et 594. La zone intermédiaire 53 est une zone potentiellement sujette à des courts circuits de réactif ou de liquide de refroidissement.

Dans une première bande 537 de la zone intermédiaire 53, les tôles 51 et 52 présentent des formes complémentaires emboîtées l'une dans l'autre sur toute la longueur d'un canal d'écoulement de liquide de refroidissement 583, comme cela ressort de la vue en coupe de la figure 24. Une deuxième bande 538 est ménagée dans la zone intermédiaire 53 entre la première bande 537 et la nervure 512. Dans la deuxième bande 538, les tôles 51 et 52 ménagent entre elles des volumes 536 de stockage de liquide de refroidissement. Dans la deuxième bande 538, la tôle 51 comporte des reliefs, par exemple le sommet de nervures 531 ou des zones plates 581. Ces reliefs sont en contact avec la couche de diffusion gazeuse 121 de l'assemblage membrane/électrodes 110.

Ainsi, dans la deuxième bande 538, du liquide de refroidissement peut être présent afin d'obtenir une régulation de température dans la zone intermédiaire 53, tout en limitant le débit dans cette zone 53 en bloquant l'écoulement provenant des canaux d'écoulement 583 ou du collecteur 593, au moyen de la première bande 537. Par ailleurs, dans la deuxième bande 538, les reliefs forment des obstacles pour limiter le débit de réactif dans la zone 53, et forment des supports pour la couche de diffusion gazeuse 121. Lorsque la couche de diffusion gazeuse 121 recouvre partiellement la deuxième bande 538, on limite avantageusement encore davantage le débit de réactif dans la zone 53.

Dans l'exemple illustré, les tôles 51 et 52 comportent des nervures dont la forme est complémentaire dans la première bande 537. Ces nervures s'étendent par exemple selon une direction perpendiculaire à la direction d'écoulement de liquide de refroidissement ou de réactif. En pratique, les tôles 51 et 52 ne doivent pas nécessairement être plaquées l'une contre l'autre dans la bande 537 mais doivent être suffisamment proches pour occasionner une très importante perte de charge face au passage de liquide de refroidissement provenant de la zone réactive 54 vers les volumes de stockage 536.

La longueur et la largeur de chaque surface plate 581 est avantageusement au moins égale à la largeur d'un canal d'écoulement de réactifs 541, afin d'assurer un bon support pour la couche de diffusion gazeuse 121. Avantageusement, afin de limiter les possibilités d'écoulement dans la deuxième bande 538, les tôles 51 et 52 présentent une alternance de volumes 536 et de zones dans lesquelles ces tôles 51 et 52 sont plaquées l'une contre l'autre, comme cela ressort davantage de la vue en coupe de la figure 25. La largeur des surfaces plates peut être différente à l'anode et à la cathode, comme représenté sur la figure 25, car l'écoulement de court-circuit peut être plus pénalisant pour un réactif que pour l'autre.

Avantageusement, comme cela ressort davantage des vues en coupe des figures 26 à 29, la zone intermédiaire 53 comporte une troisième bande 539 ménagée entre la première bande 537 et l'électrode 111. Dans cette troisième bande 539, un volume 582 est ménagé entre les tôles 51 et 52, afin d'assurer un écoulement de liquide de refroidissement à la périphérie de la zone réactive 54.

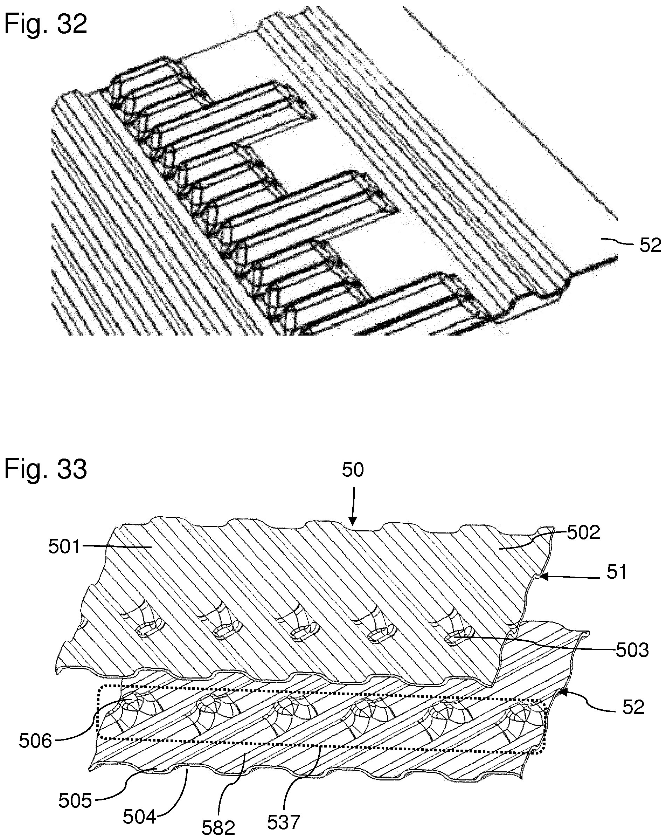

Une deuxième variante du quatrième aspect de l'invention, correspondant à la configuration illustrée à la figure 17, est illustrée aux figures 33 à 35. La direction d'écoulement du liquide de refroidissement est ici sensiblement perpendiculaire à la direction d'écoulement des réactifs. Une zone d'homogénéisation de réactif est ici ménagée de part et d'autre de la zone réactive 54. Des zones d'homogénéisation de réactif sont ici également ménagées sur la face externe de la tôle 52.

Selon cette variante, on souhaite isoler une zone de stockage de liquide de refroidissement dans une zone d'homogénéisation 50, par rapport aux canaux d'écoulement de liquide de refroidissement de la zone réactive 54. La zone réactive 54 n'est ici pas illustrée.

Dans la zone d'homogénéisation 50, des canaux d'homogénéisation 501 sont ménagés sur la face externe de la tôle 51. Ces canaux 501 sont délimités de façon connue en soi par des nervures 502. Les canaux 501 sont destinés à mettre en communication les canaux d'écoulement 541 de la zone réactive avec un collecteur 591 ou 596. À l'aplomb de cette zone d'homogénéisation 50, des canaux d'homogénéisation 504 sont ménagés sur la face externe de la tôle 52. Les canaux 504 sont délimités de façon connue en soi par des nervures 505. Les canaux 505 sont destinés à mettre en communication les canaux d'écoulement de la face externe de la tôle 52 avec un collecteur 592 ou 595.

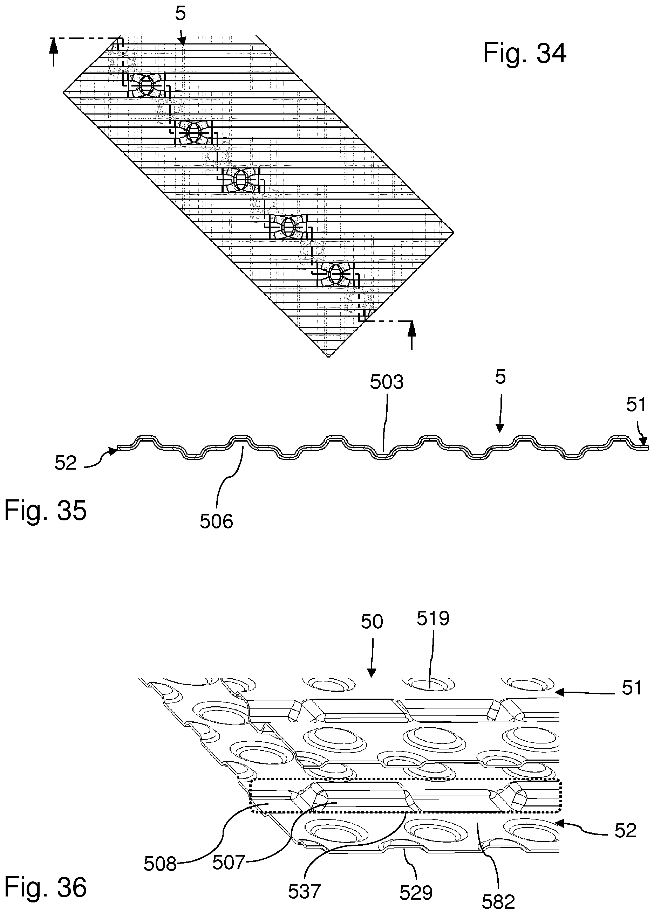

Les canaux d'homogénéisation 501 et 504 s'étendent ici selon des directions différentes. Les canaux d'homogénéisation 501 et 504 présentent ici une même section transversale. Chaque canal d'homogénéisation 501 comporte un renfoncement 503, formant un plot sur la face interne de la tôle 51. Le plot formé est ici logé dans le volume interne d'une nervure 505. Ce plot présente une forme complémentaire de celle du volume interne de la nervure 505. Un écoulement de liquide de refroidissement dans le volume interne des nervures 505 est ainsi bloqué par les plots de la tôle 51. Chaque canal d'homogénéisation 504 comporte un renfoncement 506, formant un plot sur la face interne de la tôle 52. Le plot formé est ici logé dans le volume interne d'une nervure 502. Ce plot présente une forme complémentaire de celle du volume interne de la nervure 502. Un écoulement de liquide de refroidissement dans le volume interne des nervures 502 est ainsi bloqué par les plots de la tôle 52. Ainsi, comme mieux illustré à la figure 35, correspondant à une vue en section brisée à travers les différents plots, on a ménagé une bande 537 dans laquelle les tôles 51 et 52 présentent des formes complémentaires emboîtées l'une dans l'autre, sur toute la longueur d'au moins un canal d'écoulement de liquide de refroidissement de la zone réactive. Cette bande 537 sépare ainsi une partie de la zone d'homogénéisation 50 comportant un volume de stockage de liquide de refroidissement, et une autre zone en communication avec les canaux d'écoulement de liquide de refroidissement de la zone réactive 54 et avec les collecteurs de liquide de refroidissement. Dans l'exemple illustré, un volume 582 est ménagé entre les tôles 51 et 52 afin d'assurer un écoulement de liquide de refroidissement à la périphérie de la zone réactive.

Une troisième variante du quatrième aspect de l'invention, correspondant à la configuration illustrée à la figure 17, est illustrée à la figure 36. La direction d'écoulement du liquide de refroidissement est ici sensiblement perpendiculaire à la direction d'écoulement des réactifs. Une zone d'homogénéisation de réactif est ici ménagée de part et d'autre de la zone réactive 54. Des zones d'homogénéisation de réactif sont ici également ménagées sur la face externe de la tôle 52. Selon cette variante, on souhaite également isoler une zone de stockage de liquide de refroidissement dans une zone d'homogénéisation 50, par rapport aux canaux d'écoulement de liquide de refroidissement de la zone réactive 54. La zone réactive 54 n'est ici pas illustrée.

Dans la zone d'homogénéisation 50, des plots sont ménagés en saillie soit vers l'extérieur de la tôle 51, soit vers l'intérieur de la tôle 51. À l'aplomb de cette zone d'homogénéisation 50, des plots sont également ménagés en saillie soit vers l'extérieur de la tôle 52, soit vers l'intérieur de la tôle 52. Les tôles 51 et 52 réalisent ainsi de façon connue en soi une homogénéisation de leurs réactifs par l'intermédiaire de ces plots.

Des plots 519 en saillie depuis la face interne de la tôle 51 sont en appui contre des plots 529 en saillie depuis la face interne de la tôle 52. Un volume de liquide de refroidissement est ainsi ménagé entre les tôles 51 et 52 à l'aplomb de la zone d'homogénéisation 50. Par ailleurs, la tôle 52 comporte une alternance de plots 507 en saillie vers l'intérieur et de plots 508 en saillie vers l'extérieur. La tôle 51 comporte une même alternance de plots en saillie vers l'intérieur et le plot en saillie vers l'extérieur, de formes complémentaires des plots 507 et 508. Les plots 507 et 508 s'emboîtent dans les plots correspondant de la tôle 51 dans une bande 537 sur au moins la longueur d'un canal d'écoulement de liquide de refroidissement de la zone réactive.

Cette bande 537 sépare ainsi une partie de la zone d'homogénéisation 50 comportant un volume de stockage de liquide de refroidissement, et une autre zone en communication avec les canaux d'écoulement de liquide de refroidissement de la zone réactive 54 et avec les collecteurs de liquide de refroidissement. Dans l'exemple illustré, un volume 582 est ménagé entre les tôles 51 et 52 afin d'assurer un écoulement de liquide de refroidissement à la périphérie de la zone réactive.

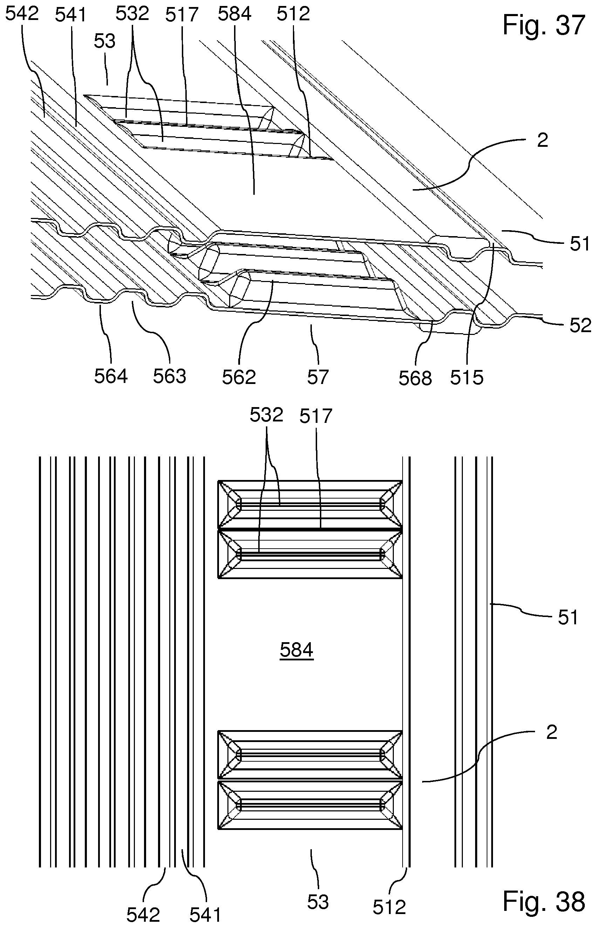

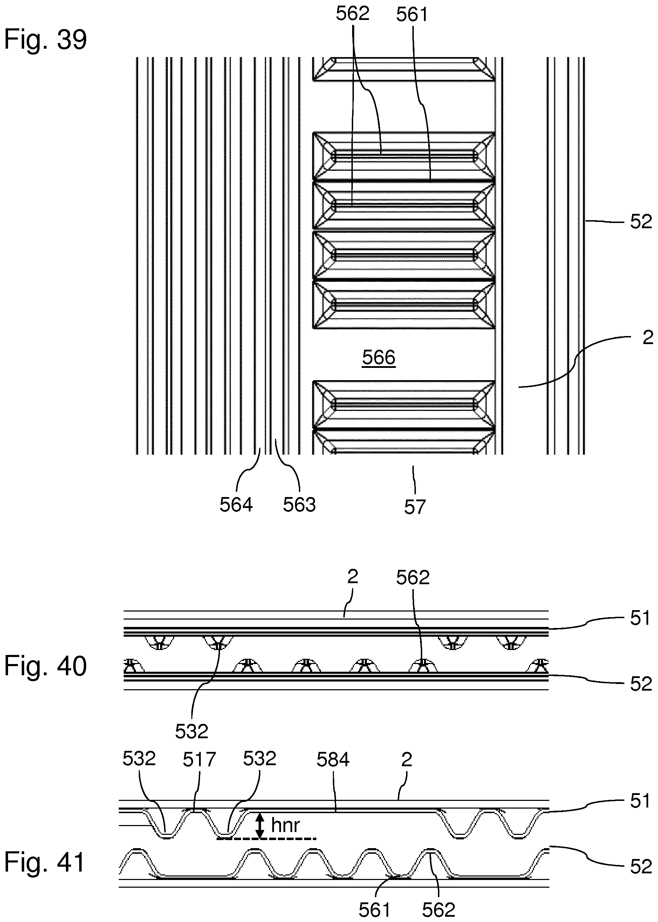

Un cinquième aspect de l'invention porte sur une plaque bipolaire telle qu'illustrée aux figures 37 à 45. La figure 37 est une vue en perspective éclatée d'un exemple de plaque bipolaire 5 selon un mode de réalisation de ce cinquième aspect de l'invention.

Selon ce cinquième aspect de l'invention, chaque plaque bipolaire 5 comporte des tôles conductrices 51 et 52 solidarisées. Les tôles conductrices 51 et 52 peuvent également être formées de tôles métalliques embouties solidarisées par soudage. Des canaux d'écoulement 583 de liquide de refroidissement sont avantageusement ménagés entre les tôles 51 et 52 et sont en communication avec des collecteurs d'entrée et sortie de liquide de refroidissement tels que détaillés précédemment.

Comme dans les exemples qui précèdent, la face externe de la tôle 51 comporte des nervures 542 délimitant des canaux d'écoulement 541 pour un réactif, par exemple le carburant. Les canaux d'écoulement 541 sont ici destinés à mettre en communication les collecteurs 591 et 596. La zone comprenant les canaux d'écoulement 541 correspond à la zone réactive 54 de la cellule électrochimique. La face externe de la tôle 51 comporte également une nervure 512 s'étendant entre les collecteurs 591 et 596. La nervure 512 est destinée à former un support pour un joint d'étanchéité 2 et s'étendant entre les collecteurs 591 et 596. Une nervure 515 s'étend également entre les collecteurs 591 et 596. Le joint d'étanchéité 2 est ici à cheval sur les nervures 512 et 515, ainsi que dans une gorge ménagée entre les nervures 512 et 515.

La face externe de la tôle 51 comporte également une zone intermédiaire 53, positionnée entre la nervure 512 et une nervure 542 de la périphérie de la zone réactive. La zone intermédiaire 53 est destinée à recevoir un débordement d'une membrane échangeuse de protons ou un débordement d'une couche de diffusion gazeuse au-delà de la zone réactive. La largeur de la zone intermédiaire 53 est destinée à tenir compte des différentes tolérances de fabrication et d'assemblage, par exemple les tolérances de positionnement de la membrane ou d'une couche de diffusion gazeuse, ou des tolérances liées à l'emboutissage d'une tôle.

La face externe de la tôle 52 comporte des nervures 564 délimitant des canaux d'écoulement 563 pour un comburant. Les canaux d'écoulement 563 sont ici destinés à mettre en communication les collecteurs 592 et 595. La zone comprenant les canaux d'écoulement 563 correspond également à la zone réactive de la cellule électrochimique. La face externe de la tôle 52 comporte également une nervure 568 s'étendant entre les collecteurs 591 et 596. La nervure 568 est destinée à former un support pour un joint d'étanchéité 2 et s'étendant entre le collecteur 592 et 595. La nervure 568 est positionnée à l'aplomb de la nervure 562, de sorte qu'une compression d'un empilement de cellules électrochimiques soit bien appliquée à la verticale des différents joints de l'empilement.

La face externe de la tôle 52 comporte également une zone intermédiaire 57, positionnée entre la nervure 568 et une nervure 564 de la périphérie de la zone réactive. La zone intermédiaire 57 est destinée à recevoir un débordement d'une membrane échangeuse de protons ou un débordement d'une couche de diffusion gazeuse au-delà de la zone réactive. La largeur de la zone intermédiaire 57 est également destinée à tenir compte des différentes tolérances de fabrication et d'assemblage, par exemple les tolérances de positionnement de la membrane ou d'une couche de diffusion gazeuse, ou des tolérances liées à l'emboutissage d'une tôle.

La zone intermédiaire 53 comporte une alternance de nervures 584 ou 517 et de renfoncements 532. Ces nervures 584 ou 517 s'étendent entre la nervure 512 et la nervure 542 de la périphérie de la zone réactive. Les nervures 584 et 517 s'étendent perpendiculairement à un axe reliant des collecteurs 591 et 596. Dans cet exemple, les nervures 517 et 584 s'étendent perpendiculairement à la nervure 512, et perpendiculairement à la nervure 542 de la périphérie de la zone réactive.

La zone intermédiaire 57 comporte une alternance de nervures 561 ou 566 et de renfoncements 562. Ces nervures 561 ou 566 s'étendent entre la nervure 568 et la nervure 564 de la périphérie de la zone réactive. Les nervures 561 ou 566 s'étendent perpendiculairement à un axe reliant des collecteurs 592 et 595. Dans cet exemple, les nervures 561 ou 566 s'étendent perpendiculairement à la nervure 568, et perpendiculairement à la nervure 564 de la périphérie de la zone réactive.

Les zones intermédiaires 53 et 57 sont sujettes à des courts circuits de réactif. Les nervures 517 et 584 permettent de réduire la section de passage potentielle pour le carburant dans la zone intermédiaire 53, et les nervures 566 et 561 permettent de réduire la section de passage potentielle pour le comburant dans la zone intermédiaire 57.

Selon le cinquième aspect de l'invention, on cherche à accroître la largeur de certaines nervures des zones intermédiaires 53 et 57 afin de limiter les débits de réactif de court-circuit, et ce sans altérer la tenue mécanique de ces nervures.

À cet effet, chaque nervure 584 est configurée pour loger au moins deux renfoncements 562 avec lesquelles cette nervure 584 est en contact. Ainsi, on peut réaliser une nervure 584 relativement large pour limiter le débit de court-circuit de carburant dans la zone intermédiaire 53, avec plusieurs appuis formés par les renfoncements 562 pour éviter un affaissement de cette nervure 584. Chaque nervure 584 pourra par exemple présenter une largeur au moins égale à la moitié de sa longueur, voire au moins égale à sa longueur.

Chaque nervure 566 est configurée pour loger au moins deux renfoncements 532 avec lesquelles cette nervure 566 est en contact. Ainsi, on peut réaliser une nervure 566 relativement large pour limiter le débit de court-circuit de carburant dans la zone intermédiaire 57, avec plusieurs appuis formés par les renfoncements 532 pour éviter un affaissement de cette nervure 566. Chaque nervure 566 pourra par exemple présenter une largeur au moins égale à la moitié de sa longueur.

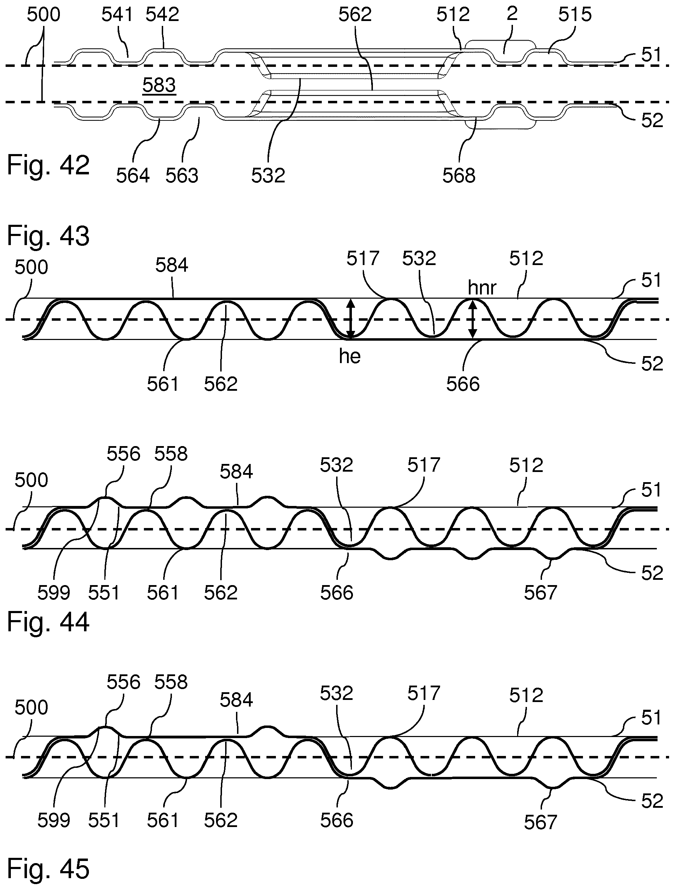

Pour limiter de façon optimale le débit dans les zones intermédiaires 53 et 57, la hauteur hnr entre les renfoncements 532 et les nervures 517 ou 584 (ou entre les renfoncements 562 et les nervures 566 ou 561) est au moins égale à 75% de la hauteur he totale des canaux d'écoulement dans la zone réactive 54, he étant obtenue en soustrayant l'épaisseur totale de tôle à l'épaisseur de la plaque bipolaire 5 dans cette zone (he étant illustrée par exemple à la figure 43).

Dans les exemples illustrés, les tôles 51 et 52 sont en contact dans la zone réactive au niveau d'un plan médian 500 de la plaque bipolaire 5. Les renfoncements 532 et 562, ainsi que les nervures 517, 584, 561 et 566 s'étendent de part et d'autre de ce plan médian 500. Les tôles 51 et 52 peuvent bien entendu être en contact dans la zone réactive avec un décalage par rapport à ce plan médian 500 de la plaque bipolaire 5.

Avantageusement, la largeur de la nervure 584 logeant plusieurs renfoncements 562 est supérieure à la largeur de la nervure 566 logeant plusieurs renfoncements 532, comme illustré dans les exemples des figures 37 à 41. En effet, un carburant tel que le dihydrogène présente une viscosité inférieure à celle d'un comburant tel que l'air ou le dioxygène, ce qui justifie de privilégier la limitation du débit de court-circuit au niveau de la zone 53 rapport à la zone 57. Dans l'exemple illustré à la figure 37, afin d'accroître la largeur de la nervure 584 avec davantage d'appuis, la nervure 584 loge au moins trois renfoncements 562, en l'occurrence quatre renfoncements.

Les premier et cinquième aspects de l'invention peuvent avantageusement être combinés. Dans la variante illustrée à la figure 44 (vue en coupe à travers les zones intermédiaires 53 et 57), les nervures 584 comportent une nervure ou excroissance 599 s'étendant également entre la nervure 512 et une nervure 542. L'excroissance 599 définit le sommet 556 de la nervure 584, de sorte que la nervure 584 présente une hauteur supérieure à celle des nervures 542. L'excroissance 599 est positionnée à l'aplomb d'une nervure 561. Deux renfoncements 562 sont en contact avec la nervure 584 de part et d'autre de chaque excroissance 599. L'excroissance 599 comporte des jonctions 551 entre le sommet 556 et les contacts 558 de la nervure 584 avec les renfoncements 562. Ces jonctions 551 présentent une partie en retrait par rapport à une droite reliant le sommet 556 et les contacts 558 les plus proches. Ainsi, selon le premier aspect invention, on favorise un enfoncement des excroissances 599 lors de l'application d'une pression par le débordement d'une couche de diffusion gazeuse dans la zone intermédiaire 53.

Dans l'exemple illustré à la figure 44, une excroissance 599 est ménagée entre chaque paire de renfoncements 562. Dans l'exemple illustré à la figure 45, une excroissance 599 n'est ménagée qu'à l'aplomb de certaines nervures 561.

De façon similaire, les nervures 566 comportent avantageusement une nervure ou excroissance 567 s'étendant également entre la nervure 568 est une nervure 564. L'excroissance 567 définit le sommet de la nervure 566, de sorte que la nervure 566 présente une hauteur supérieure à celle de nervure 564. L'excroissance 567 est positionnée à l'aplomb d'une nervure 517. Deux renfoncements 532 sont en contact avec la nervure 566 de part et d'autre de chaque excroissance 567. L'excroissance 567 comporte des jonctions entre son sommet et les contacts les plus proches entre les renfoncements 532 et la nervure 566. Ainsi, on favorise également un enfoncement des excroissances 567 lors de l'application d'une pression par le débordement d'une couche de diffusion gazeuse dans la zone intermédiaire 57.

## Revendications

1. Cellule électrochimique (1), **caractérisée en ce qu'**elle comprend:
- un assemblage membrane/électrodes (110) incluant une membrane échangeuse de protons (113), des première et deuxième électrodes fixées sur des faces opposées de ladite membrane ;
- une plaque bipolaire (5), comportant des première et deuxième tôles conductrices (51, 52), et dans laquelle :
- un collecteur d'entrée (593) et un collecteur de sortie (594) de liquide de refroidissement, et un collecteur d'entrée (591) et un collecteur de sortie (596) d'un réactif sont ménagés à travers les première et deuxième tôles conductrices,
- des canaux d'écoulement de liquide de refroidissement sont ménagés entre les tôles conductrices (51,52) et sont en communication avec les collecteurs d'entrée et de sortie de liquide de refroidissement ;
- une face externe de la première tôle conductrice (51) comportant :
- des canaux d'écoulement (541) de réactif en communication avec les collecteurs d'entrée et de sortie de réactif, recouverts par la première électrode de l'assemblage membrane/électrodes ;
- une première nervure (512) s'étendant sur le côté des canaux d'écoulement de réactif (541), un joint d'étanchéité (2) s'étendant au moins partiellement sur ladite première nervure ;
- la plaque bipolaire (5) comportant une zone intermédiaire (53) s'étendant entre la première nervure (512) et ladite première électrode (111), et comportant :
- une première bande (537) dans laquelle les première et deuxième tôles présentent des formes complémentaires emboitées l'une dans l'autre sur toute la longueur d'au moins un canal d'écoulement de liquide de refroidissement ;
- une deuxième bande (538) disposée entre la première bande et la première nervure (512), dans laquelle la première tôle comporte des reliefs (531) en contact avec l'assemblage membrane/électrodes, et dans laquelle au moins un volume (536) de stockage de liquide de refroidissement est ménagé entre les première et deuxième tôles.

2. Cellule électrochimique (1) selon la revendication 1, dans laquelle une direction reliant le collecteur d'entrée de liquide de refroidissement au collecteur de sortie de liquide de refroidissement est sensiblement parallèle à une direction reliant le collecteur d'entrée de réactif et le collecteur de sortie de réactif.

3. Cellule électrochimique (1) selon la revendication 2, dans laquelle l'assemblage membrane/électrodes (110) comporte une couche de diffusion gazeuse (121) recouvrant ladite première électrode (111) et recouvrant partiellement ladite deuxième bande (538).

4. Cellule électrochimique (1) selon la revendication 3, dans laquelle lesdits reliefs (531) incluent des surfaces plates (581) dont la largeur et la longueur sont au moins égales à la largeur d'un canal d'écoulement (541) de réactif.

5. Cellule électrochimique (1) selon l'une quelconque des revendications 2 à 4, dans laquelle ladite zone intermédiaire (53) inclut une troisième bande (539) dans laquelle un volume est ménagé entre les première et deuxième tôles pour le liquide de refroidissement.

6. Cellule électrochimique (1) selon l'une quelconque des revendications 2 à 5, dans laquelle ladite face externe de la première tôle (51) comporte des deuxièmes nervures (542) délimitant lesdits canaux d'écoulement (541) de réactif, et dans laquelle la zone intermédiaire (53) comporte des troisièmes nervures (531) s'étendant entre une desdites deuxièmes nervures et la première nervure (512).

7. Cellule électrochimique (1) selon l'une quelconque des revendications 2 à 6, dans laquelle les première et deuxième tôles forment, dans la deuxième bande, une alternance de volumes de stockage de liquide de refroidissement (536) et de zones dans lesquelles les première et deuxième tôles sont en contact.

8. Cellule électrochimique (1) selon la revendication 1, dans laquelle une direction reliant le collecteur d'entrée de liquide de refroidissement au collecteur de sortie de liquide de refroidissement est sensiblement perpendiculaire à une direction reliant le collecteur d'entrée de réactif et le collecteur de sortie de réactif.

9. Cellule électrochimique (1) selon la revendication 8, dans laquelle la face externe de la première tôle (51) comporte une zone d'homogénéisation (50) de réactif ménagée entre un desdits collecteur de réactif et lesdits canaux d'écoulement de réactif, ladite zone intermédiaire étant ménagée dans la zone d'homogénéisation de réactif.

10. Cellule électrochimique (1) selon la revendication 9, dans laquelle la face externe de la première tôle (51) comporte des premiers canaux d'homogénéisation (501) de réactif délimités par des quatrièmes nervures (502) respectives et dans laquelle la face externe de la deuxième tôle (52) comporte des deuxièmes canaux d'homogénéisation (504) de réactif délimités par des cinquième nervures (505) respectives, lesdits premiers canaux d'homogénéisation s'étendant selon des directions différentes de celles des deuxièmes canaux d'homogénéisation, lesdits premiers canaux d'homogénéisation comportant des renfoncements (503) formant des plots respectifs sur la face interne de la première tôle dans ladite première bande (537) de la zone intermédiaire, lesdits plots étant logés dans le volume interne des cinquièmes nervures (505), lesdits deuxièmes canaux d'homogénéisation (504) comportant des renfoncements (506) formant des plots respectifs sur la face interne de la deuxième tôle dans ladite première bande (537) de la zone intermédiaire, lesdits plots étant logés dans le volume interne des quatrième nervures (502).

11. Cellule électrochimique (1) selon la revendication 9, dans laquelle des plots d'homogénéisation (519,529) sont ménagés sur les faces internes des première et deuxième tôles (51, 52) à l'aplomb de ladite zone d'homogénéisation (50), des plots d'homogénéisation des première et deuxième tôles étant en contact.

12. Cellule électrochimique (1) selon l'une quelconque des revendications précédentes, dans laquelle ladite première nervure (512) s'étend entre les collecteurs d'entrée et de sortie de réactif.

## Patentansprüche

1. Elektrochemische Zelle (1), **dadurch gekennzeichnet, dass** sie Folgendes aufweist:
- eine Membran-Elektroden-Anordnung (110), die eine Protonenaustauschmembran (113), eine erste und zweite Elektrode, die auf gegenüberliegenden Flächen der Membran befestigt sind, aufweist,
- eine bipolare Platte (5), die ein erstes und zweites Leitblech (51, 52) aufweist und in der:
- ein Einlasssammler (593) und ein Auslasssammler (594) für Kühlflüssigkeit und ein Einlasssammler (591) und ein Auslasssammler (596) für ein Reagens durch das erste und zweite Leitblech ausgebildet sind,
- Strömungskanäle für Kühlflüssigkeit zwischen den Leitblechen (51, 52) ausgebildet sind und in Verbindung mit dem Einlass- und dem Auslasssammler für Kühlflüssigkeit stehen;
- wobei eine Außenfläche des ersten Leitblechs (51) Folgendes aufweist:
- Strömungskanäle (541) für ein Reagens in Verbindung mit dem Einlass- und dem Auslasssammler für ein Reagens, die durch die erste Elektrode der Membran-Elektroden-Anordnung bedeckt sind;
- eine erste Rippe (512), die sich auf der Seite der Strömungskanäle für ein Reagens (541) erstrecken, wobei sich eine Dichtung (2) mindestens teilweise auf der ersten Rippe erstreckt;
- wobei die bipolare Platte (5) einen Zwischenbereich (53) aufweist, der sich zwischen der ersten Rippe (512) und der ersten Elektrode (111) erstreckt, und Folgendes aufweist:
- einen ersten Streifen (537), in dem das erste und zweite Blech komplementäre Formen aufweisen, die über die gesamte Länge von mindestens einem Strömungskanal für Kühlflüssigkeit ineinander gesteckt sind;
- einen zweiten Streifen (538), der zwischen dem ersten Streifen und der ersten Rippe (512) angeordnet ist, in dem das erste Blech Reliefs (531) in Kontakt mit der Membran-Elektroden-Anordnung aufweist und in dem mindestens ein Volumen (536) zum Speichern von Kühlflüssigkeit zwischen dem ersten und zweiten Blech ausgebildet ist.

2. Elektrochemische Zelle (1) nach Anspruch 1, wobei eine Richtung, die den Einlasssammler für Kühlflüssigkeit mit dem Auslasssammler für Kühlflüssigkeit verbindet, im Wesentlichen parallel zu einer Richtung ist, die den Einlasssammler für ein Reagens mit dem Auslasssammler für ein Reagens verbindet.

3. Elektrochemische Zelle (1) nach Anspruch 2, wobei die Membran-Elektroden-Anordnung (110) eine Gasdiffusionsschicht (121) aufweist, die die erste Elektrode (111) bedeckt und die den zweiten Streifen (538) teilweise bedeckt.

4. Elektrochemische Zelle (1) nach Anspruch 3, wobei die Reliefs (531) ebene Oberflächen (581) aufweisen, deren Breite und Länge mindestens gleich der Breite eines Strömungskanals (541) für ein Reagens sind.

5. Elektrochemische Zelle (1) nach einem der Ansprüche 2 bis 4, wobei der Zwischenbereich (53) einen dritten Streifen (539) aufweist, in dem ein Volumen zwischen dem ersten und zweiten Blech für die Kühlflüssigkeit ausgebildet ist.

6. Elektrochemische Zelle (1) nach einem der Ansprüche 2 bis 5, wobei die Außenfläche des ersten Leitblechs (51) zweite Rippen (542) aufweist, die die Strömungskanäle (541) für ein Reagens begrenzen, und wobei der Zwischenbereich (53) dritte Rippen (531) aufweist, die sich zwischen einer der zweiten Rippen und der ersten Rippe (512) erstrecken.

7. Elektrochemische Zelle (1) nach einem der Ansprüche 2 bis 6, wobei das erste und zweite Blech in dem zweiten Streifen einen Wechsel von Volumen zum Speichern von Kühlflüssigkeit (536) und von Bereichen, in denen das erste und zweite Blech in Verbindung stehen, bilden.

8. Elektrochemische Zelle (1) nach Anspruch 1, wobei eine Richtung, die den Einlasssammler für Kühlflüssigkeit mit dem Auslasssammler für Kühlflüssigkeit verbindet, im Wesentlichen senkrecht zu einer Richtung ist, die den Einlasssammler für ein Reagens mit dem Auslasssammler für ein Reagens verbindet.

9. Elektrochemische Zelle (1) nach Anspruch 8, wobei die Außenfläche des ersten Blechs (51) einen Homogenisierungsbereich (50) für ein Reagens aufweist, der zwischen einem der Sammler für ein Reagens und den Strömungskanälen für ein Reagens ausgebildet ist, wobei der Zwischenbereich in dem Homogenisierungsbereich für ein Reagens ausgebildet ist.

10. Elektrochemische Zelle (1) nach Anspruch 9, wobei die Außenfläche des ersten Blechs (51) erste Homogenisierungskanäle (501) für ein Reagens aufweist, die durch jeweilige vierte Rippen (502) begrenzt sind und wobei die Außenfläche des zweiten Blechs (52) zweite Homogenisierungskanäle (504) für ein Reagens aufweist, die durch jeweilige fünfte Rippen (505) begrenzt sind, wobei sich die ersten Homogenisierungskanäle in Richtungen erstrecken, die von jenen der zweiten Homogenisierungskanäle verschieden sind, wobei die ersten Homogenisierungskanäle Vertiefungen (503) aufweisen, die jeweilige Klötzchen auf der Innenfläche des ersten Blechs in dem ersten Streifen (537) des Zwischenbereichs bilden, wobei die Klötzchen in dem Innenvolumen der fünften Rippen (505) angeordnet sind, wobei die zweiten Homogenisierungskanäle (504) Vertiefungen (506) aufweisen, die jeweilige Klötzchen auf der Innenfläche des zweiten Blechs in dem ersten Streifen (537) des Zwischenbereichs bilden, wobei die Klötzchen in dem Innenvolumen der vierten Rippen (502) angeordnet sind.

11. Elektrochemische Zelle (1) nach Anspruch 9, wobei Klötzchen zur Homogenisierung (519, 529) auf den Innenflächen des ersten und zweiten Blechs (51, 52) im Lot zu dem Homogenisierungsbereich (50) ausgebildet sind, wobei Klötzchen zur Homogenisierung des ersten und zweiten Blechs in Verbindung stehen.

12. Elektrochemische Zelle (1) nach einem der vorhergehenden Ansprüche, wobei sich die erste Rippe (512) zwischen dem Einlass- und dem Auslasssammler für ein Reagens erstreckt.

## Claims

1. Electrochemical cell (1), **characterized in that** it comprises:
- a membrane electrode assembly (110) including a proton exchange membrane (113) and first and second electrodes fastened to opposite faces of said membrane;
- a bipolar plate (5), comprising first and second conductive sheets (51, 52), and in which:
- an inlet manifold (593) and an outlet manifold (594) of coolant, and an inlet manifold (591) and an outlet manifold (596) of a reactant are made through the first and second conductive sheets;
- coolant flow channels are made between the conductive sheets (51, 52) and are in communication with the coolant inlet and outlet manifolds;
- an outer face of the first conductive sheet (51) comprising:
- reactant flow channels (541) in communication with the reactant inlet and outlet manifolds, covered by the first electrode of the membrane electrode assembly;
- a first rib (512) extending on the side of the reactant flow channels (541), a gasket (2) extending at least partially on said first rib;
- the bipolar plate (5) comprising an intermediate zone (53) extending between the first rib (512) and said first electrode (111), and comprising:
- a first band (537) in which the first and second sheets have complementary shapes nested one in the other over the entire length of at least one coolant flow channel;
- a second band (538) positioned between the first band and the first rib (512), in which the first sheet comprises reliefs (531) in contact with the membrane electrode assembly, and in which at least one coolant storage volume (536) is made between the first and second sheets.

2. Electrochemical cell (1) according to Claim 1, in which a direction connecting the coolant inlet manifold to the coolant outlet manifold is substantially parallel to a direction connecting the reactant inlet manifold and the reactant outlet manifold.

3. Electrochemical cell (1) according to Claim 2, in which the membrane electrode assembly (110) comprises a gas diffusion layer (121) covering said first electrode (111) and partially covering said second band (538).

4. Electrochemical cell (1) according to Claim 3, in which said reliefs (531) include flat surfaces (581), the width and length of which are at least equal to the width of a reactant flow channel (541).

5. Electrochemical cell (1) according to any one of Claims 2 to 4, in which said intermediate zone (53) includes a third band (539) in which a volume is made between the first and second sheets for the coolant.

6. Electrochemical cell (1) according to any one of Claims 2 to 5, in which said outer face of the first sheet (51) comprises second ribs (542) delimiting said reactant flow channels (541), and in which the intermediate zone (53) comprises third ribs (531) extending between one of said second ribs and the first rib (512).

7. Electrochemical cell (1) according to any one of Claims 2 to 6, in which the first and second sheets form, in the second band, an alternation of coolant storage volumes (536) and zones in which the first and second sheets are in contact.

8. Electrochemical cell (1) according to Claim 1, in which a direction connecting the coolant inlet manifold to the coolant outlet manifold is substantially perpendicular to a direction connecting the reactant inlet manifold and the reactant outlet manifold.

9. Electrochemical cell (1) according to Claim 8, in which the outer face of the first sheet (51) comprises a reactant homogenizing zone (50) made between one of said reactant manifolds and said reactant flow channels, said intermediate zone being made in the reactant homogenizing zone.

10. Electrochemical cell (1) according to Claim 9, in which the outer face of the first sheet (51) comprises first reactant homogenizing channels (501) delimited by respective fourth ribs (502) and in which the outer face of the second sheet (52) comprises second reactant homogenizing channels (504) delimited by respective fifth ribs (505), said first homogenizing channels extending along directions different from those of the second homogenizing channels, said first homogenizing channels comprising indentations (503) forming respective studs on the inner face of the first sheet in said first band (537) of the intermediate zone, said studs being housed in the internal volume of the fifth ribs (505), said second homogenizing channels (504) comprising indentations (506) forming respective studs on the inner face of the second sheet in said first band (537) of the intermediate zone, said studs being housed in the internal volume of the fourth ribs (502).

11. Electrochemical cell (1) according to Claim 9, in which homogenizing studs (519, 529) are made on the inner faces of the first and second sheets (51, 52) at the vertical of said homogenizing zone (50), homogenizing studs of the first and second sheets being in contact.

12. Electrochemical cell (1) according to any one of the preceding claims, in which said first rib (512) extends between the reactant inlet and outlet manifolds.
